# EUROPEAN PATENT APPLICATION

(11) **EP 2 495 456 A1**
(43) Date of publication of application: **05.09.2012**
(21) Application number: 10826793.1
(22) Date of filing: 28.10.2010
(51) Int. Cl.: F16B 21/18, B60K 15/03, F16B 19/10

(54) **COMPONENT MOUNTING STRUCTURE AND PUSH NUT**

(30) Priority: 29.10.2009 JP 2009248740; 22.09.2010 JP 2010211540
(71) Applicant: Yachiyo Industry Co., Ltd., Sayama-shi Saitama 350-1335 (JP)
(72) Inventor: OMORI Manabu, Sakura-shi Tochigi 329-1334 (JP)
(74) Representative: Piésold, Alexander James
(86) International application number: PCT/JP2010/069123
(87) International publication number: WO 2011/052661

(57) **Abstract**

Manufacturing costs are reduced. Connection strength and easiness for mounting are improved. A component mounting structure comprises a fastener includes a first fastener (41) and a second fastener (61), wherein the second fastener is pressed into the first fastener to pinch a component between the first fastener and the second fastener. The fastener further includes a push nut (31) into which an end portion of the first fastener is inserted. The push nut includes a base plate (32) that has an annular shape, a first engaging portion (33) formed inside the base plate and inclined relative to the base plate in a direction towards a bottom portion of the recess and a second engaging portion (34) formed outside the base plate and inclined relative to the base plate in a direction opposite to the direction towards the bottom portion of the recess.

## Description

### Technical Field

This invention relates to a component mounting structure for mounting a component on a mounted component. Also, this invention relates to a push nut for mounting a second member on a first member.

### Background Art

A known mounting structure is used to mount a protector (hereinafter called a "component") for protecting a fuel tank (hereinafter also called a "mounted component") on an outer surface of the fuel tank carried on an automobile. Previously, a fastener has been used to fix a component to a projection formed on a mounted component. For instance, Patent Literature 1 discloses a technique for engaging a component with a mounting boss fixed on a mounted component. Patent Literature 2 discloses a technique for fixing a component on a bolt fixed on a mounted component with a nut being meshed with the bolt.

### Related Art

### Patent Literatures

Patent Literature 1: JP 2008-37230 A
Patent Literature 2: JP 4034104 B

### Summary of Invention

### Disadvantages to be resolved by Invention

The invention in Patent Literature 1 allows the clip to achieve a relatively-easy mounting of a component. However, since a portion of the clip is cut away at one end, the clip tends to readily come off from the cut portion. Also, the invention in Patent Literature 2 can provide a relatively-strong connection between a component and a mounted component, since the bolt is meshed with the nut to connect the component with the mounted component. However, the work for meshing the bolt with the nut needs many steps. Thus, it has been difficult to achieve both the improvements of the connection strength and easiness for mounting.

Also, if a mounted component is made by a blow-molding technique with a resin material, in general a projection is formed on an outer surface of a component by welding a resin material or an insert blowing. The projection is used to fix the component on the outer surface of the mounted component, as discussed above. However, the methods have disadvantages discussed below.

A shape of a mounted component varies depending on a type of vehicle, resulting in a variation of mounting position of a fastener depending on the type of vehicle. Thus, the method for welding a resign material causes a disadvantage. That is, costs for utilities and manufacturing are increased, since a dedicated welding machine is needed for manufacturing vehicles per a type of vehicle. Further, characteristics of a material needed at a welding position of the mounted component are different from those at an engaging position of the fastener, resulting in a two-color molding with two kinds of resins. As a result, a manufacturing cost is increased. The insert blowing causes a disadvantage. That is, a work for filling a mold with an insert member is complicated, resulting in increases of manufacturing steps and costs.

This invention is conceived to resolve the disadvantages. It is an object of this invention to provide a component mounting structure to decrease the manufacturing costs and improve the connection strength and easiness for mounting. Furthermore, it is another object of this invention to provide a push nut to improve the connection strength and easiness for mounting.

### Means for Resolving Disadvantages

To resolve the disadvantages stated above an object of this invention provides a component mounting structure of this invention comprising: a mounted component having a recess on an outer surface; a component that is mounted on the outer surface of the mounted component; and a fastener that includes a first fastener disposed at an inner side portion of the component, the inner side portion of the component being opposed to the mounted component, and a second fastener disposed at an outer side portion of the component, the outer side portion of the component being apart from the mounted component, the second fastener being engaged with the first fastener; wherein
the second fastener is pressed into the first fastener to pinch the component between the first fastener and the second fastener to hold the component between the first fastener and the second fastener; the fastener further includes a push nut into which an end portion of the first fastener is inserted;
the push nut includes:
a base plate having an axial bore into which the end portion of the first fastener is inserted; a first engaging portion formed inside the base plate and inclined relative to the base plate in a direction towards a bottom portion of the recess such that an end of the first engaging portion becomes closer to a center axis of the axial bore as the end of the first engaging portion becomes close to the bottom portion of the recess; and a second engaging portion formed outside the base plate and inclined relative to the base plate in a direction opposite to the direction towards the bottom portion of the recess such that an end portion of the second engaging portion becomes apart from the center axis of the axial bore as the end of the second engaging portion becomes apart from the bottom portion of the recess; wherein the first fastener is engaged with the first engaging portion, and a surface of the recess is engaged with the second engaging portion.

According to the structure, steps for forming the first member can be removed because only the recess is formed on the outer surface of the first member. This results in a reduction of the manufacturing cost. Also, the component can be held by pressing the second fastener into the first fastener. This allows easiness of mounting to be enhanced.
Also, the push nut can smoothly be pressed into the recess, because the first engaging hook and the second engaging hook, of the push nut, are inclined relative to the base plate such that the first engaging hooks and the second engaging hooks become closer to the center axis of the axial bore as the first engaging hooks and the second engaging hooks become close to the bottom portion of the recess. On the other hand, when an external force is applied to the second member, the first engaging hooks and the second engaging hooks bite into and are engaged with the second member and the first member, respectively. This results in the connection strength being enhanced.

The second engaging portion may include a plurality of second engaging hooks. According to the structure, the second engaging portion includes a plurality of the second engaging hooks, so that the second engaging portion can easily be deflected. The press can smoothly be done.

A front side portion of each of the second engaging hooks may be larger in width than a base side portion of each of the second engaging hooks. According to the structure, the second engaging hooks can be more deflected. Also, since the width of the front side portion of each of the second engaging hooks is larger than that of the base side portion of each of the second engaging hooks, connected portions of the front side portions of the second engaging hooks are increased.

Each of the second engaging hooks may have a curved portion that extends towards the bottom portion of the recess. According to the structure, when an external force is applied to the push nut, the curved portion of the push nut absorbs the external force.

The first engaging portion may include a plurality of first engaging hooks. According to the structure, since the first engaging portion includes a plurality of first engaging hooks, the push nut can easily deflected. This results in the second fastener to be smoothly inserted into the first fastener, when the second fastener is attached to the first fastener.

A rib may extend vertically relative to an outer peripheral portion of the end portion of the first fastener from the outer peripheral portion. According to the structure, the push nut can be prevented from coming off from the front end of the first fastener.

The first fastener may include a plate-like first head portion, a first leg portion extending vertically relative to the first head portion from the first head portion, a cylindrical portion extending vertically relative to the first head portion in a direction opposite to the direction towards the first leg portion, a hollow portion bored in the first head portion, the first leg portion and the cylindrical portion, and an engaging hole in the cylindrical portion.
The second fastener may include a plate-like second head portion, a second leg portion extending vertically relative to the second head portion from the second head portion, a second leg portion extending vertically relative to the second head portion, and an engaging projection formed on the second leg portion.
Also, the second leg portion may be inserted into the hollow portion while the engaging projection is engaged with the engaging hole.

According to the structure, the first fastener can firmly be engaged with the second fastener by using the engaging hole and engaging projection.

The first head portion may include a plate-like body, a cutout portion opened outward from the body, and a blade member in the cutout portion extending outward from a center portion of the first head portion.
Also, the blade member may be inclined relative to the body in a direction towards the second fastener to press the component towards the second fastener.

According to the structure, looseness between the component and the first and second fasteners can be prevented.

The second leg portion may include a base shaft portion extending vertically relative to the second head portion, and a pair of engaging members extending from a top end of the base shaft portion toward the second head portion and having the engaging projections.
The second head portion may include spill ports formed at a pair of portions which are opposed to sandwich the base shaft portion to receive front ends of the engaging members.
Also, the engaging projections may become engaged with the engaging holes of the cylindrical portion as the engaging members become elastically deformed.

According the structure, the first fastener can easily be engaged with the second fastener, because the engaging members having the engaging projections can elastically be deflected. The first fastener can be disengaged from the second fastener by pinching the front ends of the pair of the engaging members, since the engaging members are elastically be deflected. This results in an easy disengagement of the second fastener from the first fastener.

Also, this invention provides a push nut for mounting a second member to a recess formed in a first member comprising: a base plate having an axial bore into which the second member is inserted; a first engaging portion formed inside the base plate and inclined relative to the base plate in a direction towards a bottom portion of the recess such that an end of the first engaging portion becomes closer to a center axis of the axial bore as the end of the first engaging portion becomes close to the bottom portion of the recess; and a second engaging portion formed outside the base plate and inclined relative to the base plate in a direction opposite to the direction towards the bottom portion of the recess such that an end portion of the second engaging portion becomes apart from the center axis of the axial bore as the end of the second engaging portion becomes apart from the bottom portion of the recess; wherein the second engaging portion is engaged with the first engaging portion, while a surface of the recess is engaged with the second engaging portion.

According to the structure, steps for forming the first member can be removed because only the recess is formed on the outer surface of the first member. This results in a reduction of the manufacturing cost. Also, the second member can be attached to the first member by pressing the push nut and the second member into the recess. This results in an improved workability of mounting the component on the mounted component.

Also, the first engaging hooks and the second engaging hooks, of the push nut, are inclined relative to the base plate to become closer to the center axis of the axial bore as the first engaging hooks and the second engaging hooks become close to the bottom portion of the recess. As a result, when the push nut is attached to the first fastener or when the first fastener having the push nut is inserted into the recess, works for attaching the push nut to the first fastener or inserting the first fastener into the recess can be smoothly achieved.
On the other hand, when an external force is applied to the second member, the first engaging hooks and the second engaging hooks bite into the second fastener and the recess of the first member, respectively. This results in the connection strength being enhanced.

Also, this invention provides a component mounting structure for mounting a component on an outer surface of a mounted component comprising: a recess formed on an outer surface of the mounted component; a component having a through hole and mounted on the outer surface of the mounted component; and a fastener includes a first fastener disposed at an inner side portion of the component, the inner side portion of the component being opposed to the mounted component, and a second fastener disposed at an outer side portion of the component, the outer side portion of the component being apart from the mounted component; wherein the fastener pinches the component between the first fastener and the second fastener which pass through the through hole, and the fastener is engaged with a projecting hook formed on an inner peripheral portion of the recess.

According to the structure, the recess has only to be formed on the outer surface of the mounted component. Thus, the structure of a mold for molding the mounted component can be simplified. This leads to a decrease of the manufacturing costs, because the third embodiment does not need any complicated work such as a boss welding or an insert blow molding. Also, the component can easily be mounted on the mounted component by engaging the fastener with the projecting hooks on the surface of the recess. Also, the engaging strength can be increased.

The first fastener may include a plate-like first head portion, a first leg portion that is elastically-deformable extending vertically relative to the first head portion from the first head portion, and a hollow portion bored through the first head portion and the first leg portion.
The second fastener may include a plate-like second head portion and a second leg portion extending vertically relative to the second head portion from the second head portion.
The second leg portion of the second fastener may be inserted into the hollow portion of the first fastener to pinch the component between the second fastener and the first fastener.
Also, an outer peripheral portion of the first leg portion may be engaged with the projecting hook on the recess while an inner peripheral portion of the first leg portion may be engaged with an outer peripheral portion of the second leg portion.

According to the structure, the component can be more rigidly mounted on the mounted component, because an outer surface portion of the first leg portion and an inner surface portion of the first leg portion are engaged with the projecting hook in the recess and an outer surface of the second leg portion, respectively.

The first head portion of the first fastener may include a thick portion that has an annular shape and a pair of thin portions each of which is thinner in thickness than the thick portion. The thin portions radially extend from inner and outer surface side portions of the thick portion. The inner surface side portion of the thick portion is opposed to the mounted component. The outer surface side portion of the thick portion is apart from the mounted component.
The thin portion at the inner surface side portion of the thick portion may be inclined relative to the inner surface side portion towards the mounted component.
Also, the thin portion at the outer surface side portion of the thick portion may be inclined relative to the outer surface side portion in a direction opposite to the direction towards the mounted component.

There is a possibility that a mounted component, a component, a fastener, etc. have deformed portions (dimensional tolerance) during the manufacturing steps. In such a case the component can have looseness relative to the mounted component. Also, there is a possibility that a work for mounting the component is hard to be conducted. However, in this structure the thin portions of the first head of the first fastener can be deflected, so that the first head can be deflected according to changes (deformations) of a shape of the mounted component, etc. This allows the dimensional tolerance of the component and the mounted component to be absorbed, so that easiness for mounting can be increased.

The recess may include a bored bottom portion and a plurality of the projecting hooks formed on the bottom portion. Also, the distance between the projecting hooks that are opposed to each other may be smaller than a maximum width of the bottom portion.

According to the structure, the fastener that is inserted into the recessed bottom portion can firmly be held.

The stiffening member may be provided on the outer peripheral portion of the first leg portion of the first fastener to be engaged with the projecting hooks on the recess.

According to the structure, the stiffening member can prevent the first leg portion that tends to wear from wearing down.

The recessed portion may be formed on an outer side surface of the second head portion of the second fastener by cutting out a portion of the second head portion towards the second leg portion.

According to the structure, the first fastener 304 can be disengaged from the second fastener by inserting a screwdriver into the recessed portion.

The component mounting structure may comprise a band for holding outside the mounted component and the component.

According to the structure, the mounted component can rigidly be mounted on the mount component.

### Advantageous Effects of Invention

According to the component mounting structure of this invention, the manufacturing cost can be decreased and the connection strength and mounting ability can also be increased. Also, according to the push nut of this invention, the connection strength and mounting ability can be increased.

### Brief Description of Drawings

FIG. 1 is a perspective view showing a component mounting structure concerning a first embodiment of this invention from an underside of a vehicle.
FIG. 2 is a sectional view showing the component mounting structure concerning the first embodiment.
FIG. 3 is an exploded sectional view showing a structure of a fastener concerning the first embodiment.
FIGs. 4A and 4B are views showing a push nut concerning the first embodiment. FIG. 4A is a perspective view of the push nut. FIG. 4B is a plan view of the push nut.
FIGs. 5A and 5B are views showing a first fastener concerning the first embodiment. FIG. 5A is a sectional view of the first fastener. FIG. 5B is a perspective view of the first fastener.
FIGs. 6A and 6B are views showing a second fastener concerning the first embodiment. FIG. 6A is a perspective view of the second fastener. FIG. 6B is a sectional view of the second fastener.
FIGs. 7A, 7B and 7C are sectional views showing stepwise processes for a component mounting method concerning the first embodiment.
FIG. 8 is a sectional view showing a connection state of the fastener with a mounted component concerning the first embodiment.
FIG. 9 is a sectional view showing a fastener of a first modification.
FIGs. 10A and 10B are views showing a fastener of a second modification. FIG. 10A is a perspective view of the fastener of the second modification. Fig. 10B is a sectional view of the fastener of the second modification.
FIG. 11 is an exploded sectional view showing a structure of a fastener concerning a second embodiment.
FIGs. 12A and 12B are views showing a recess concerning the second embodiment. FIG. 12A is a perspective view of the recess. Fig. 12B is a sectional view of the recess.
FIGs. 13A and 13B are views showing a push nut concerning the second embodiment. FIG. 13A is a perspective view of the push nut. FIG. 13B is a sectional view of the push nut.
FIGs. 14A and 14B are views showing a first fastener concerning the second embodiment. FIG. 14A is a perspective view of the first fastener. FIG. 14B is a side view of the first fastener.
FIG. 15 is a sectional view showing a connection state of the fastener with a mounted component concerning the second embodiment.
FIG. 16 is an exploded sectional view showing a structure of a fastener concerning a third embodiment.
FIGs. 17A and 17B are views showing a recess of the mounted component concerning the third embodiment. FIG. 17A is a perspective view of the recess. Fig. 17B is a sectional side view of the recess.
FIGs. 18A and 18B are views showing a first fastener concerning the third embodiment. FIG. 18A is a perspective view of the first fastener. FIG. 18B is a sectional view of the first fastener.
FIG. 19 is a perspective view showing a second fastener concerning the third embodiment.
FIG. 20 is a sectional side view showing a connection state of the fastener concerning the third embodiment.
FIGs. 21A and 21B are views showing a fastener of a third modification. FIG. 21A is a perspective view of the fastener. Fig. 21B is an expanded view showing a main section of the fastener.
FIGs. 22A and 21B are views showing a fastener of a fourth modification. FIG. 22A is a perspective view of the fastener. Fig. 22B is a sectional side view of the fastener.

### Mode for Carrying out the Invention

### [First Embodiment]

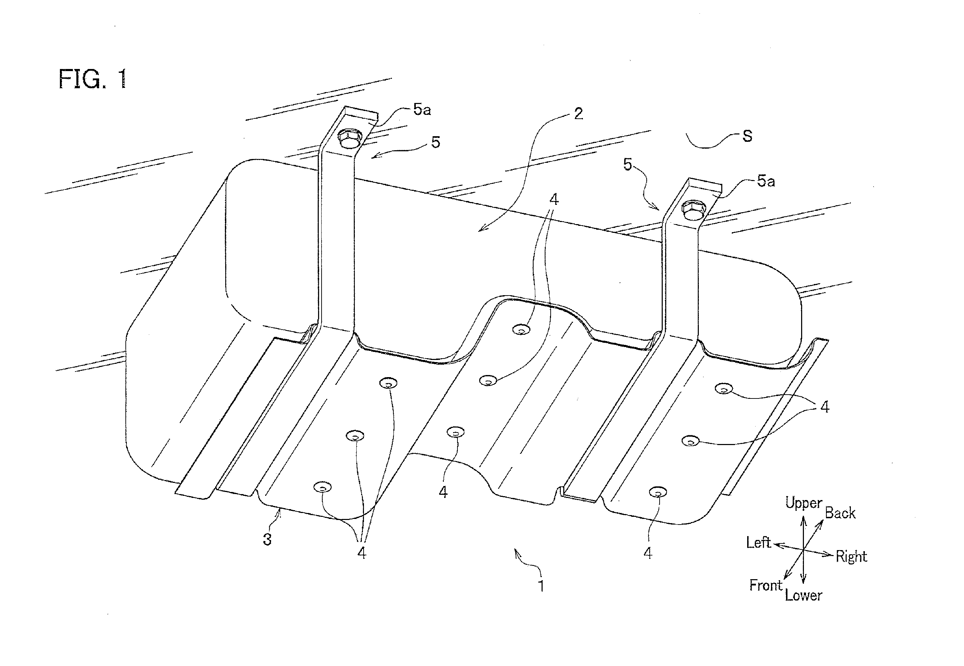

A first embodiment of this invention is now explained in detail with reference to the accompanying drawings. As in FIG. 1, a component mounting structure 1 of this embodiment includes a mounted component 2, a component 3 covering an outer surface of the mounted component 2, a plurality of fasteners 4 for fastening the component 3 to the mounted component 2, and two tank bands 5, 5 for holding outside the mounted component 2 and the component 3. The component mounting structure 1 is an example to show a fuel tank (the mounted component 2) mounted on a vehicle on which a plate-like protector (the component 3) is mounted.

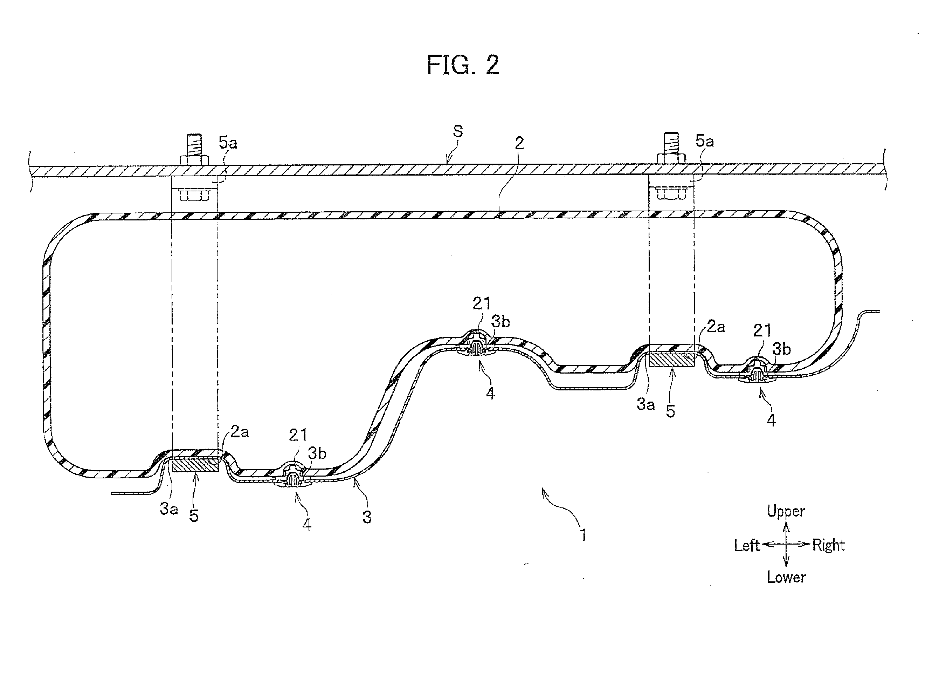

FIGs. 1 and 2 show the mounted component 2 that is a fuel tank. The fuel tank is made of resin materials. Also, the fuel tank is formed by blow molding and includes a multilayer structure including barrier material layers sandwiching a thermal plastic layer. Also, thermal plastic layers are formed outside the barrier material layers. In this embodiment of this invention the mounted component 2 is held on (or hung from) a bottom surface of a chassis S of a vehicle by tank bands 5, 5. The mounting position of the mounted component 2 is not limited to the embodiment. The mounted component 2 is shaped into a flattened box. Extended portions and recessed portions are formed on an outer surface of the mounted component 2, as necessary, in view of the structure and strength of a vehicle. Two recesses 2a, 2a are formed on the outer surface of the mounted component 2 to put the tank bands 5, 5 in the recessed portions. Also, recesses 21 are formed on the outer surface of the mounted component 2. The fasteners 4 are engaged with the recesses 21. The construction of the recesses 21 is below explained in detail.

The longer direction of the mounted component 2 is positioned in a width direction of a vehicle, while the shorter direction of the mounted component 2 is positioned in a front-back direction of a vehicle. In the following explanations of this description front, rear, left and right directions are travelling directions of a vehicle in accordance with the arrows in Fig. 1.

FIGs. 1 and 2 show the component 3. In this embodiment, the component 3 is a protector to insulate the component 3 from heat of an exhaust pipe or other portions or to protect the mounted component 2 from an external force. The component 3 is a plate-like member made of metallic or resin materials to cover the entire undersurface of the mounted component 2. The outer shape of the component 3 has the same shape as that of the mounted component 2. The component 3 is fixed to the mounted component 2 by a plurality of fasteners 4 as explained below. Also, the component 3 and the mounted component 2 are mounted on the vehicle by the tank bands 5.

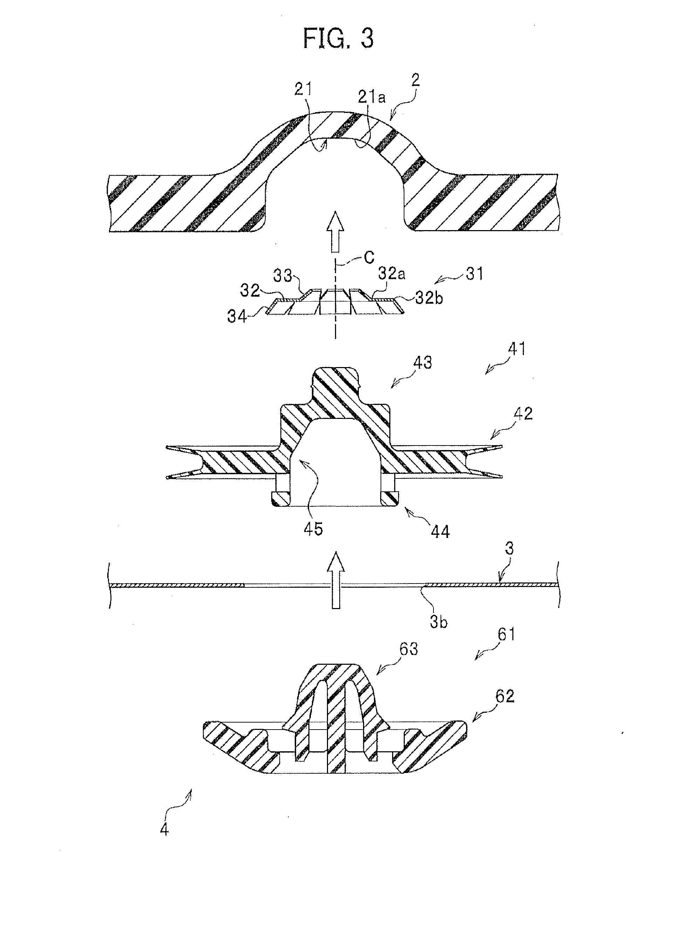

As in FIGs. 2 and 3, two recessed portions 3a, 3a and a plurality of through holes 3b are formed on the component 3. The tank bands 5, 5 are put in the recessed portions 3a. The recessed portions 3a are formed on positions corresponding to the positions at which the recessed portions 2a, 2a of the mounted component 2 are formed. The fasteners 4 are inserted into the through holes 3b. In this embodiment nine through holes 3b are formed on the component 3 in accordance with the number of the fasteners 4. Although the component 3 of this embodiment is formed as stated above, the shape, material, etc., of the component 3 are not limited to the embodiment, as long as the shape, material, etc., of the component 3 are effective to protect the mounted component 2.

As in FIGs. 2 and 3, the fasteners 4 pass through the through holes 3b of the component 3 to hold the component 3 on the mounted component 2 from an outside (or an underside) of the component 3. The fasteners 4 themselves and the mounting structures of them are below explained.

As in FIGs. 1 and 2, the tank bands (or bands) 5 are members that are used to hold the mounted component 2 and the component 3 on the vehicle. In this embodiment two tank bands 5 are put on the mounted component 2 at a front side position and a rear side position, respectively. Each of the tank bands 5, 5 has fastening portions 5a, 5a at both ends. The tank bands 5, 5 are fastened to the chassis S of vehicle etc. by volts at the fastening portions 5a, 5a. Although in this embodiment the tank bands 5, 5 are made of resin materials, the materials of the tank bands are not limited to the embodiment.

The tank bands 5 allow the mounted component 2 and the component 3 to be held on the vehicle. Also, the tank bands 5 allow the component 3 to be prevented from being shifted from the position of the mounted component 2. Since the mounted component 2 and the component 3 have the recessed portions 2a, 2a and the recessed portions 3a, 3a, respectively, a positioning of the component 3 relative to the mounted component 2 and a work for mounting the tank bands 5 on the mounted component 2 can readily be achieved. Also, the recessed portions 2a, 2a of the mounted component 2 and the recessed portions 3a, 3a of the component 3 allow the tank bands 5 to be prevented from coming lower than the lowest surface of the component 3.

Then, the recesses 21, the fasteners 4 and their mounting structures are detailed. As in FIG. 3, each fastener 4 includes a push nut 31, a first fastener 41, and a second fastener 61, which are separated from each other. The component 3 is pinched between the first fastener 41 and the second fastener 61 to be held on the mounted component 2. The fastener 4 is inserted into the recess 21 of the mounted component 2.

As in Fig. 3, the recess 21 is formed on the outer surface of the mounted component 2. The recess 21 is formed when the mounted component 2 is blow-molded. In this embodiment the recess 21 is recessed into a bowl-like shape and opened downward (or outward) from the mounted component 2. The shape, size, etc., of the recess 21 are not limited to the embodiment.

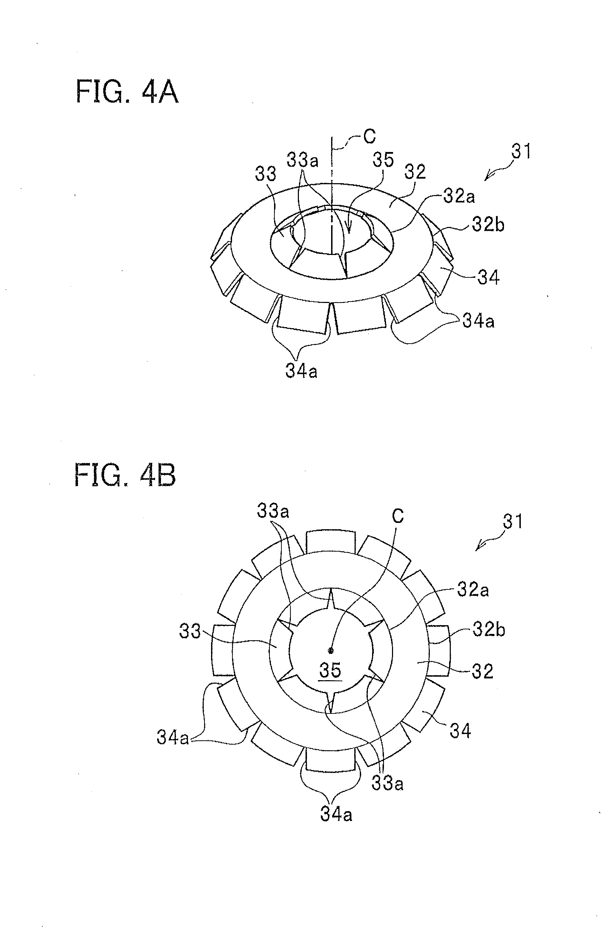

The push nut 31 is made of a metal material. Also, the push nut 31 has a flattened and annular shape, as in FIGs. 3 and FIGs. 4A and 4B. An end portion of the first fastener 41 is inserted into the push nut 31. The push nut 31 is then put in the recess 21. The push nut 31 includes a base plate 32, first engaging hooks (first engaging portions) 33 that are formed on and inside the base plate 32, and second engaging hooks (second engaging portions) 34 that are formed on and outside the base plate 32. The push nut 31 is made by press working. That is, the push nut 31 is cut out from a metal plate. Then, portions to be the first engaging hooks 33 and the second engaging hooks 34 are squeezed. An axial bore 35 is formed at the center of the base plate 32. The first fastener 41 is inserted into the axial bore 35.

The base plate 32 is a plate and has an annular shape. As in FIG. 3, the first engaging hooks 33 are formed on an inner edge 32a of the base plate 32. Also, the first engaging hooks 33 are inclined relative to the base plate 32 and extends towards a bottom portion 21a of the recess 21 such that the ends of the first engaging hooks 33 become closer to the center axis C of the axial bore 35 as the ends of the first engaging hooks 33 become close to the bottom portion 21a of the recess 21. As in FIGs. 4A and 4B, a plurality of first slit portions 33a are radially formed on the first engaging hooks 33 and extend inward from the base plate 32. Each of the first slit portions 33a has a V-like shape in a plan view. The first slit portions 33a are formed at an equal interval. Each of the first slit portions 33a is larger as the slit portion becomes close to the center axis C of the axial bore 35. The size and the number of the first slit portions 33a are not limited to this embodiment.

As in FIG. 3, the second engaging hooks 34 are formed on an outer edge 32b of the base plate 32. The second engaging hooks 34 are inclined relative to the base plate 32 and extend in a direction opposite to the direction towards the bottom portion 21a of the recess 21 such that the ends of the second engaging hooks 34 become apart from the center axis C of the axial bore 35 as the ends of the second engaging hooks 34 are apart from the bottom portion 21a of the recess 21. Thus, the first engaging hooks 33 and the second engaging hooks 34 are inclined in the same direction. As in FIGs. 4A and 4B, a plurality of second slit portions 34a are radially formed on the second engaging hooks 34 and extend outward from the base plate 32. Each of the second slit portions 34a has a V-like shape in a plan view. The second slit portions 34a are formed at an equal interval. Each of the second slit portions 34a is larger as the slit portion becomes apart from the center axis C of the axial bore 35. The size and the number of the second slit portions 34a are not limited to this embodiment.

In this embodiment the first engaging hooks 33 and the second engaging hooks 34 are illustrated as the first engaging portion and the second engaging portion, respectively. The first engaging portion and the second engaging portion are not limited to the first engaging hooks 33 and the second engaging hooks 34. The first engaging portion and the second engaging portion that are engaged with the first fastener 41 and the recess 21, respectively, may have any shape. For example, in the embodiment stated above the first slit portions 33a and the second slit portions 34a may not be formed.

As in FIG. 3, the first fastener 41 includes a first head portion 42, a first leg portion 43 that extends vertically relative to the first head portion 42 towards the recess 21, a cylindrical portion 44 that extends vertically relative to the first head portion 42 towards the component 3, and a hollow portion 45. The first fastener 41 is disposed between the mounted component 2 and the component 3. In this embodiment the first fastener 41 is made of a resin material. However, the material of the first fastener 41 is not limited to the embodiment.

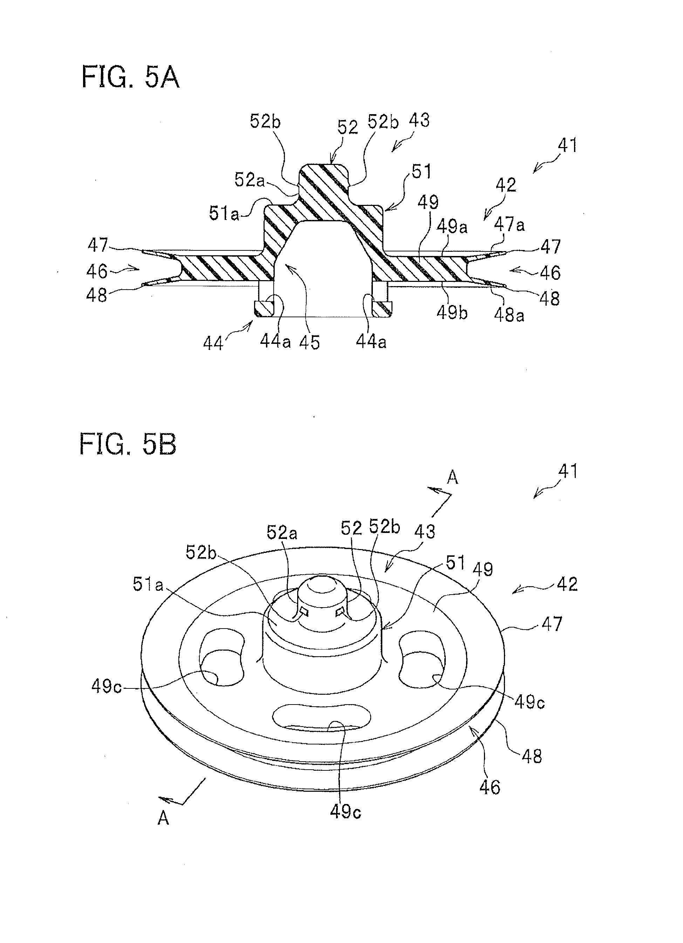

As in FIG. 3 and FIGs. 5A and 5B, the first head portion 42 has a plate-like shape. The outer diameter of the first head portion 42 is larger than the inner diameter of the through hole 3b of the component 3. The first head portion 42 includes a thick portion 49, a pair of thin portions 47, 48 that are formed around the thick portion 49, and a groove 46 formed between the thin portions 47, 48.

The thick portion 49 is formed into an annular shape. The thick portion 49 includes an inner surface 49a positioned inside (or near) the mounted component 2 and an outer surface 49b positioned outside (or apart from) the mounted component 2. Also, as in FIG. 5B, the thick portion 49 has through holes 49c that are formed to pass through the thick portion 49 in an upper-to-lower direction. In this embodiment four through holes 49c are formed on the first leg portion 43. The through holes 49c allow the first head portion 42 to be reduced in weight.

The thin portion 47 is formed around the outer edge of the thick portion 49 and extends upward from the outer edge. In detail, the inner surface (or upper surface) 47a of the thin portion 47 is inclined upwards relative to the inner surface (or upper surface) 49a of the thick portion 49. In other words, the thin portion 47 radially extends outward from the inner surface 49a of the thick portion 49 and is then inclined inward (or towards the mounted component 2) relative to the inner surface 49a of the thick portion 49. Also, the thin portion 47 is formed to be gradually thinner as the thin portion 47 becomes further apart from the center of the first head portion 42.

The thin portion 48 is formed around the outer edge of the thick portion 49 and extends downward from the outer edge. In detail, the outer surface (or lower surface) 48a of the thin portion 48 is inclined downward relative to the outer surface (or lower surface) 49b of the thick portion 49. In other words, the thin portion 48 radially extends outward from the outer surface 49b of the thick portion 49 and is then inclined outward (or towards a direction opposite to the direction towards the mounted component 2) relative to the outer surface 49b of the thick portion 49. Also, the thin portion 48 is formed to be gradually thinner as the thin portion 48 becomes further apart from the center of the first head portion 42.

The groove 46 is formed on the entire peripheral portion of the first head portion 42 to be recessed toward the center of the first head portion 42. As explained above, the first head portion 42 has a pair of the thin portions 47, 48 around the peripheral portion. Thus, when an external force is applied to the thin portions 47, 48, the thin portions 47, 48 can be deflected. In other words, the thin portions 47, 48 can be deflected to decrease the distance between the thin portions 47, 48 when an external force is applied to the thin portions 47, 48. Then, the thin portions 47, 48 return to original positions when the external force is free from the thin portions 47, 48.

The first leg portion 43 extends vertically relative to the first head portion 42 from the center portion of the first head portion 42. The first leg portion 43 includes a larger diameter portion 51 and a smaller diameter portion 52. The larger diameter portion 51 extends vertically relatively the first head portion 42 and has a hollow portion therein. The outer diameter of the larger diameter portion 51 is smaller than the inner diameter of the recess 21.

The smaller diameter portion 52 is formed to have the same center as that of the larger diameter portion 51. The smaller diameter portion 52 has a cylindrical shape and extends substantially vertically relative to an upper surface 51a of the larger diameter portion 51. The outer diameter of the smaller diameter portion 52 is slightly smaller than the diameter of the axial bore 35. Four ribs 52b are formed on a peripheral portion 52a of the smaller diameter portion 52. The ribs 52b prevent the push nut 31 from coming off from the smaller diameter portion 52 in an upper direction. In this embodiment the ribs 52b are shaped to be generally triangular in a sectional view. The number and the shape of the ribs 52b are not limited to this embodiment, if the number and the shape of the ribs 52b are effective to allow the push nut 31 to be inserted under the ribs 52b and to prevent the push nut 31 from coming off from the smaller diameter portion 52 in an upper direction.

A cylindrical portion 44 has an annular shape and extends downward from the first head portion 42. The component 3 is positioned by the cylindrical portion 44. The cylindrical portion 44 receives the second fastener 61. A pair of engaging holes 44a are bored through side portions of the cylindrical portion 44, which are opposed to each other, in a horizontal direction.

As in FIG. 5A, the hollow portion 45 is bored through the larger diameter portion 51, the first head portion 42 and the cylindrical portion 44. A second leg portion 63 of the second fastener 61 is inserted into the hollow portion 45.

The first fastener 41 of this embodiment is formed as discussed above and may have any shape. For example, the first fastener 41 may not have the thin portions 47, 48.

As in FIG. 3, the second fastener 61 includes a second head portion 62 and a second leg portion 63 that extends upward from the second head portion 62. The second fastener 61 is attached to a lower (or outer) face of the component 3. In this embodiment the second fastener 61 is made of a material that is excellent in fire resistance and heat resistance in comparison with the first fastener 41. The material of the second fastener 61 is not limited to any material.

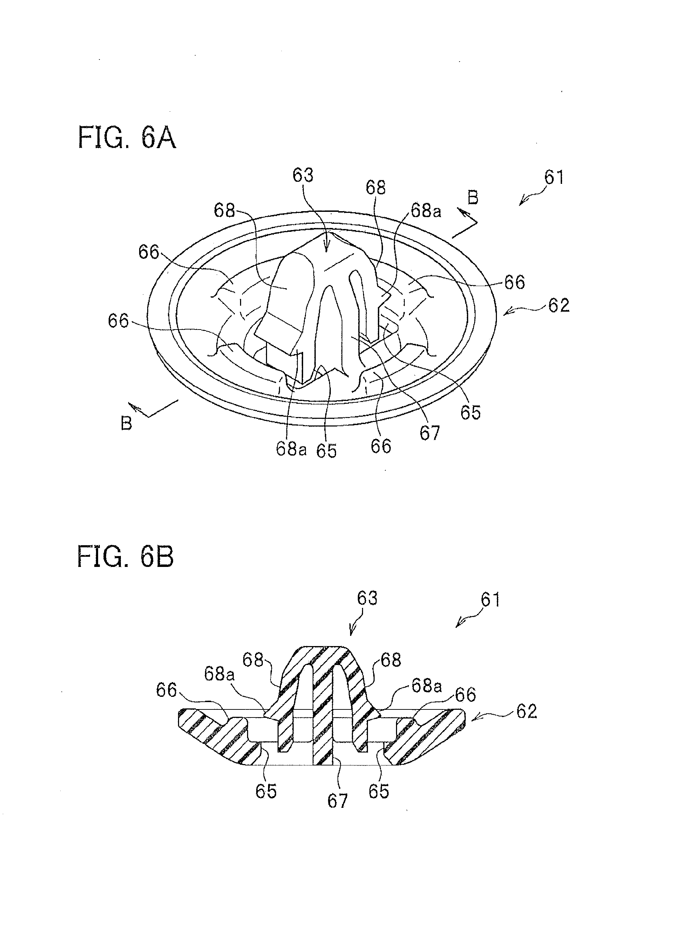

As in FIG. 3 and FIGs. 6A and 6B, the second head portion 62 is a generally disk-shaped member and has a recessed portion at the center. The recessed portion is opposed to the component 3. The outer diameter of the second head portion 62 is nearly as large as that of the thick portion 49 of the first fastener 41. A pair of spill ports 65 and four projecting portions 66 are formed on the second head portion 62. The spill ports 65 are through holes that allow engaging members 68 discussed below to move in the spill ports 65. The spill ports 65 are formed at portions of the second head portion 62, which portions are opposed to each other at either side of a base shaft portion 67 of the second leg portion 63 discussed below. The spill ports 65 of this invention are formed to be rectangular shapes and may have any shape. In this embodiment four projecting portions 66 are formed. The four projecting portions 66 are disposed around the second leg portion 63 at an equal interval.

As in FIGs. 6A and 6B, the second leg portion 63 includes the base shaft portion 67 and a pair of the engaging members 68 that extend from the base shaft portion 67. The base shaft portion 67 extends upward from the center portion of the second head portion 62. Base side portions of the engaging members 68 are connected to the top end of the base shaft portion 67, while front ends (or bottom ends) that are free ends of the engaging members 68 are positioned in the spill ports 65. The engaging members 68 are curved such that the engaging members 68 are apart from the base shaft portion 67. The engaging members 68 are elastically deformed to become close the base shaft portion 67, when an external force is applied to the front ends of the engaging members 68 towards the base shaft portion 67. The engaging members 68 are returned to original positions when the external force is free from the engaging members 68.

An engaging projection 68a is formed on a side portion of each of a pair of the engaging members 68. The engaging projections 68a project from the side portions of the engaging members 68 in directions such that the engaging projections 68a are apart from the base shaft portion 67. Each of the engaging projection 68a of this embodiment has a triangular shape in a sectional view and may have any shape. Each of the engaging projections 68a is engaged with one of the engaging holes 44a of the cylindrical portion 44.

The second fastener 61 of this embodiment is formed as discussed above and may have any shape. For example, the second fastener 61 may not have the projecting portions 66.

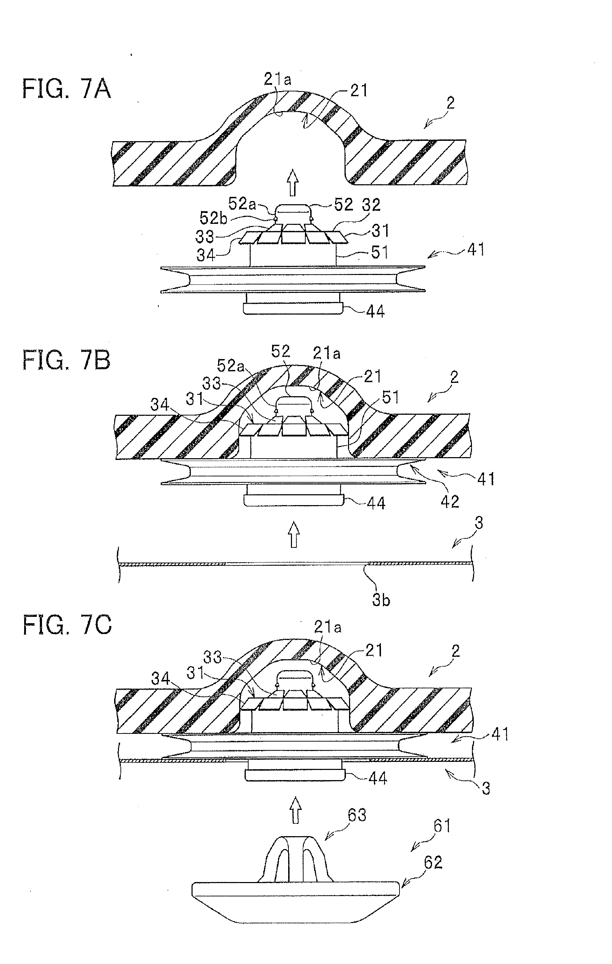

Next, a method for mounting the component 3 is explained.
First, as in FIG. 7A, the push nut 31 is mounted around the smaller diameter portion 52 of the first fastener 41. That is, the smaller diameter portion 52 is inserted into the push nut 31 from the direction of the second engaging hook 34 to contact the base plate 32 with the upper surface of the larger diameter portion 51. The top ends of the first engaging hooks 33 are slightly moved outward by the smaller diameter portion 52. That is, a diameter of a circle defined by the top ends of the first engaging hooks 33 is slightly expanded by the smaller diameter portion 52. Then, the top ends of the first engaging hooks 33 contact with the outer peripheral portion 52a of the smaller diameter portion 52 at positions under the ribs 52b (and near the larger diameter portion 51).

Then, as in FIG. 7B, the first fastener 41 having the push nut 31 is pressed into the recess 21 of the mounted component 2. When the second engaging hooks 34 are pressed into the recess 21, the second engaging hooks 34 contacts with the inner surface of the recess 21 and are slightly contracted radially by the inner surface. Also, the first head portion 42 of the first fastener 41 contacts with the outer surface of the mounted component 2. Then, the cylindrical portion 44 of the first fastener 41 is inserted into the through hole 3b of the component 3.

Finally, as in FIG. 7C, the second fastener 61 is compressed into the first fastener 41 to engage the first fastener 41 with the second fastener 61. As a result, the component 3 is sandwiched between the first fastener 41 and the second fastener 61, and thus the component 3 is mounted on the mounted component 2.

The mounting method of the component 3 is not limited to the method discussed above. For instance, after the push nut 31, the first fastener 41, the component 3 and the second fastener 61 are previously integrated, the integration may be compressed into the recess 21.

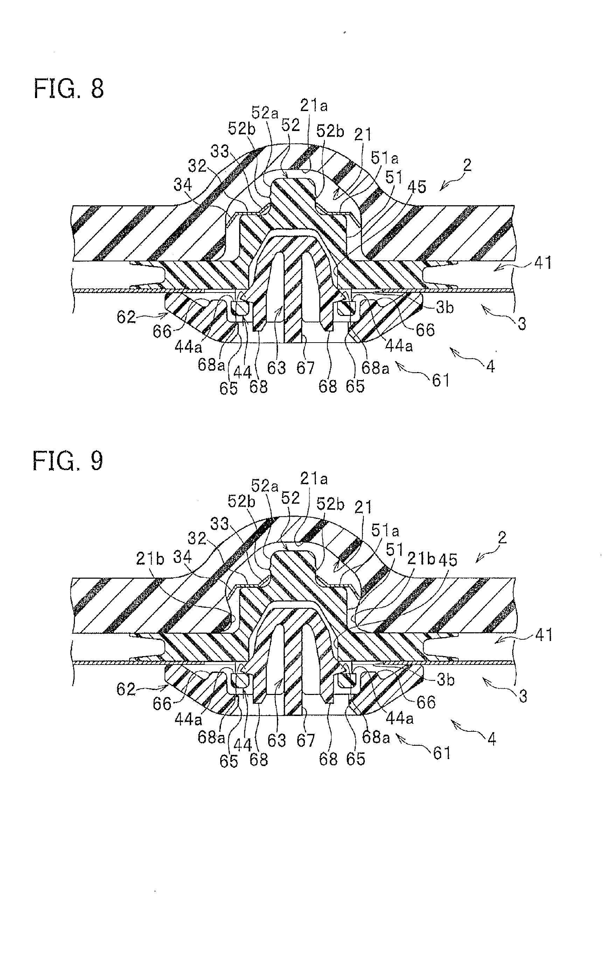

In reference to FIG. 8 the connection condition of the fastener 4 with the mounted component is now explained. As in FIG. 8, when the second fastener 61 is pressed into the cylindrical portion 44, the front ends of the engaging members 68 of the second fastener 61 are pressed by the inner surface of the cylindrical portion 44 of the first fastener 41 to move towards the base shaft portion 67. When the engaging projections 68a of the engaging members 68 are moved to the engaging holes 44a of the cylindrical portion 44, the engaging members 68 return original positions in the engaging holes 44a. As a result, the engaging projections 68a are engaged with the engaging holes 44a. This allows the first fastener 41 to be engaged with the second fastener 61. Thus, the component is pinched between the first fastener 41 and the second fastener 61.

When the second fastener 61 is released from the first fastener 41, fingers of a worker, for example, are inserted into the spill ports 65, 65 of the second fastener 61 to move the front ends of the engaging members 68, 68 towards the base shaft portion 67. This results in a disengagement of the engaging projections 68a, 68a of the engaging members 68, 68 from the engaging holes 44a, 44a of the cylindrical portion 44. Then, the second fastener 61 is pulled in a direction such that the second fastener 61 is apart from the first fastener 41. This results in a disengagement of the second fastener 61 and the component 3 from the first fastener 41.

According to the component mounting structure 1 discussed above, only the recess 21 is needed to be formed on the outer surface of the mounted component 2. This allows a simple structure of a mold to be used for blow molding, so that the mounted component 2 can easily be molded. Thus, the component mounting structure needs no complicated work for boss welding, insert blowing, etc., unlike a conventional structure. According to the component mounting structure, manufacturing costs can be decreased.

The component 3 can be held by pressing the second fastener 61 into the first fastener 41, which is inserted into the push nut. This results in an improved workability of mounting the component on the mounted component 2.

Also, the first engaging hooks 33 and the second engaging hooks 34, of the push nut 31, are inclined relative to the base plate 32 to become closer to the center axis C of the axial bore 35 as the first engaging hooks 33 and the second engaging hooks 34 become close to the bottom portion 21a of the recess 21. As a result, when the push nut 31 is attached to the first fastener 41 or when the first fastener 41 having the push nut 31 is inserted into the recess 21, works for attaching the push nut to the first fastener or inserting the first fastener into the recess can be smoothly achieved.

On the other hand, when an external force is applied to the component 3 in a direction opposite to the direction towards the mounted component 2, the first engaging hooks 33 and the second engaging hooks 34 bite into and are engaged with the smaller diameter portion 52 of the first fastener 41 and the recess 21 of the mounted component 2, respectively. This results in the connection strength being enhanced.

Also, the first slit portions 33a are formed on the first engaging hooks 33. Thus, the first engaging hooks 33 of the push nut 31 can easily be deflected. Also, the smaller diameter portion 52 of the first fastener 41 can readily be inserted into the axial bore 35 of the push nut 31. The second slit portions 34a are formed on the second engaging hooks 34. Thus, the second engaging hooks 34 of the push nut 31 can easily be deflected. Also, the push nut 31 can readily be inserted into the recess 21 of the mounted component 2.

Also, the push nut 31 can be prevented from coming off from (the front end of) the smaller diameter portion 52 of the first fastener 41, because the ribs 52b are formed on the outer peripheral portion 52a of the smaller diameter portion 52 of the first fastener 41.

Also, the first fastener 41 can firmly be attached to the second fastener 61, because the engaging holes 44a and the engaging projections 68a are formed on the first fastener 41 and the second fastener 61, respectively. Also, the engaging members 68 can easily be engaged with the engaging holes 44a, because the engaging members 68 can elastically be deformed relative to the base shaft portion 67. Also, the second fastener 61 and the component 3 can readily be removed from the first fastener 41 by pinching the pair of the engaging members 68, because the engaging members 68 are elastically deformed.

Further, because the thin portions 47, 48 are formed on the first fastener 41, the outer edge portion of the first head portion 42 can easily be deflected. A deformation is generated when the recess 21 of the mounted component 2, the component 3 and the fastener 4 are molded. As a result, there is a possibility that looseness is generated between the mounted component 2 and the component 3, because of the dimension tolerance. Also, there is a possibility that it is difficult to conduct a mounting work of the component 3. However, in this embodiment the thin portions 47, 48 can be deflected to be deformed in accordance with changes of the shape of the mounted component 2, etc. The thin portions 47, 48 allow the dimensional tolerance of each member to be absorbed, so that the push nut can firmly be mounted. Also, the elastic deformation of the thin portions 47, 48 allows a mounting ability of the fastener 4 to be enhanced. Further, the thin portions 47, 48 can be elastically deformed in accordance with movements of the mounted component 2 and the component 3, since the thin portions 47, 48 are formed on the upper side and the lower side of the thick portion 49.

### [First Modification]

The embodiment of the fastener of this invention is explained above. However, its design may be changed to an extent that is not out of the scope of this invention. FIG. 9 is a sectional view showing a first modification of a fastener. The first modification in FIG. 9 is different from the embodiment stated above in that projecting hooks 21b in the first modification are formed on the recess 21 of the mounted component 2.

The projecting hooks 21b are formed on the inner surface of the recess 21 to project toward the center of the recess 21. The projecting hooks 21b are formed on the entire peripheral portion of the inner surface of the recess 21. The projecting hooks 21b allow the second engaging hook 34 to easily be engaged with the projecting hooks 21b. This results in little disengagement of the first fastener 41 even if an external force is applied to the first fastener 41, so that the connection strength of the first fastener 41 with the recess 21 can be increased.

### [Second Modification]

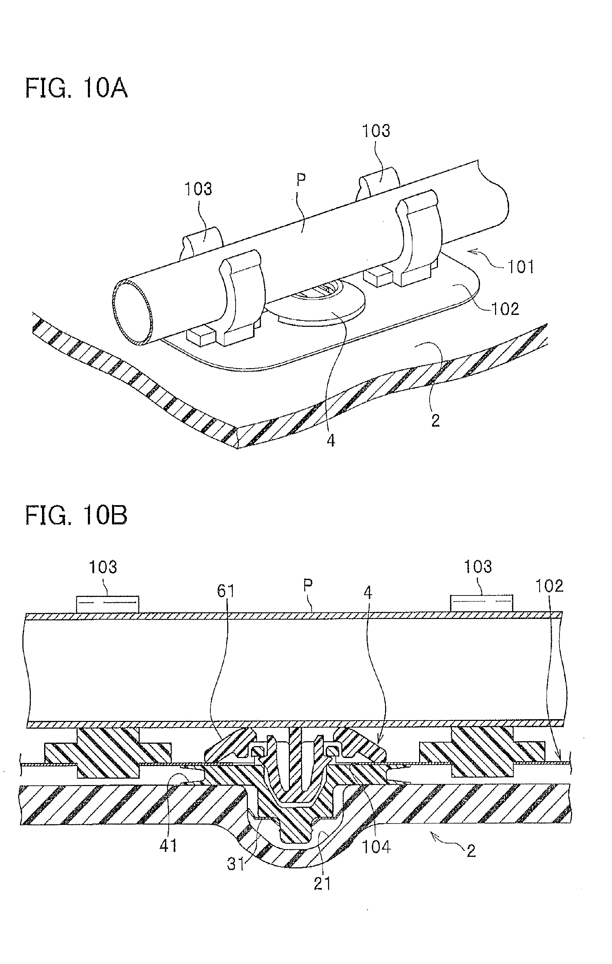

FIGs. 10A and 10B show a second modification of a fastener. FIG. 10A is a perspective view of the second modification. FIG. 10B is a sectional view of the second modification. The embodiment discussed above is an example of a protector for a component. The second modification is an example of a base plate for a tube holding member 101 to mount a tube P as the component.

As in FIG. 10A, the tube holding member 101 is use to attach a tube P including a vapor return tube etc. to a mounted component (or fuel tank) 2. The tube holding member 101 includes a component (or base plate) 102 and a pair of clamping clips 103, 103 which extend vertically relative to the component 102.

As in FIG. 10B, a through hole 104 is formed on a component (or base plate) 102 to pass the fastener 4 therethrough. Each clamping clip 103 is formed into a U-shape in a side view. Thus, the clamping clips 103 can pinch the tube P therein when the tube P is pressed into the clamping clips 103 from an opening side.

As in FIG. 10B, the second fastener 61 passes through the through hole 104 of the component 102, which is pinched between the first fastener 41 and the second fastener 61. As a result, the component (or even a base plate) 102 can easily be mounted by the fastener 4 on the mounted component 2.

### <Other Modifications >

Although in the embodiments discussed above the push nut 31 is used as a portion of the fastener 4, only the push nut 31 may be used to perform the mounting of the component. For example, as in FIG. 7B, the first fastener 41 (second member) can be installed in the recess 21 formed on the mounted component (first member) through the push nut 31. Although in the embodiment the first member is a fuel tank and the second member is the first fastener, another embodiment may be used for the first and second members.

According to the structure stated above, steps for forming the first member can be removed because only the recess 21 is formed on the outer surface of the first member. This results in a reduction of the manufacturing cost. Also, the second member can be attached to the first member by pressing the push nut 31 and the second member into the recess 21. This allows easiness of mounting to be enhanced.

Also, the push nut 31 can smoothly be pressed into the recess 21, because the first engaging hook 33 and the second engaging hook 34, of the push nut 31, are inclined relative to the base plate 32 such that the first engaging hooks 33 and the second engaging hooks 34 become closer to the center axis of the axial bore as the first engaging hooks 33 and the second engaging hooks 34 become close to the bottom portion 21a of the recess 21. On the other hand, when an external force is applied to the second member, the first engaging hooks 33 and the second engaging hooks 34 bite into and are engaged with the second member and the first member, respectively. This results in the connection strength being enhanced.

### [Second Embodiment]

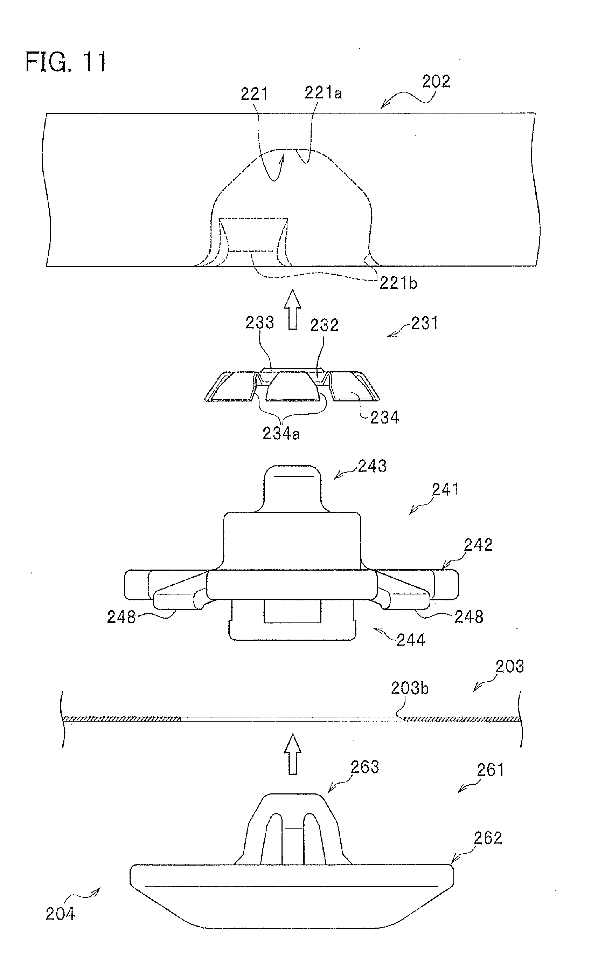

Then, a second embodiment of this invention is explained. As in FIG. 11, shapes of a recess 221, a push nut 231 of a fastener 204, and a first fastener 241, of the second embodiment are different from those of the first embodiment.

The fastener 204 of the second embodiment includes the push nut 231, the first fastener 241 and a second fastener 261. The first fastener 241 and the second fastener 261 pinch a component 203 therebetween, and are inserted into the recess 221 of a mounted component 202. Detailed explanations about the portions of the second embodiment common to the first embodiment are omitted.

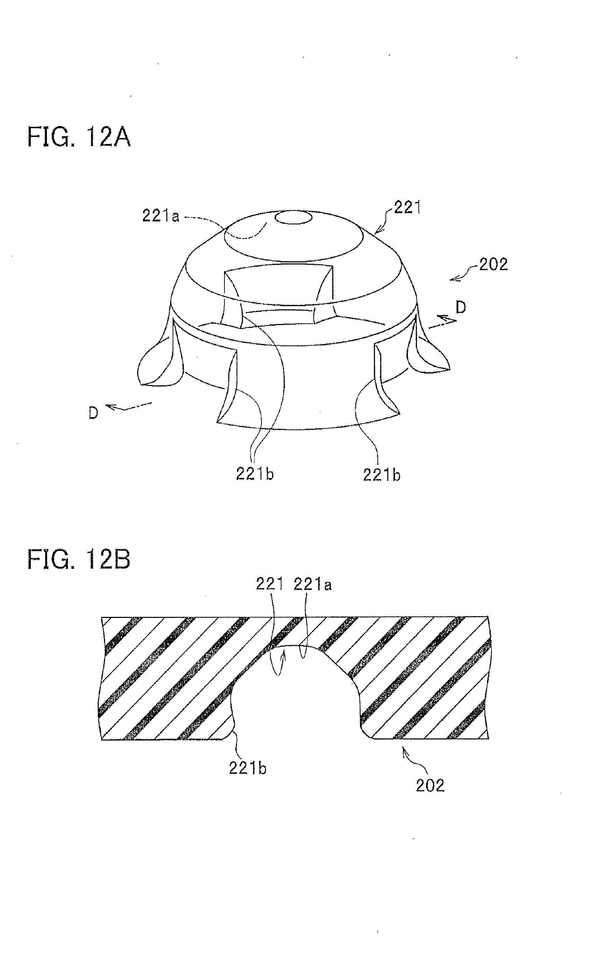

As in FIGs. 12A and 12B, the recess 221 is formed on the outer surface of the mounted component 202 to be recessed. The recess 221 is formed when the mounted component 202 is blow-molded. In this embodiment the recess 221 is opened downward (towards the outside of the mounted component 202).

Projecting hooks 221b are formed on the inner surface of the recess 221. The projecting hooks 221b are formed to project towards the center portion of the recess 221. In this embodiment three projecting hooks 221b are formed at an equal interval. The projecting hooks 221b allow second engaging hooks 234 discussed below to easily be engaged with the projecting hooks 221b. This results in little disengagement of the first fastener 241 from the recess 221 even if an external force is applied to the component 203, so that the engaging strength of the first fastener 241 with the recess 221 can be increased.

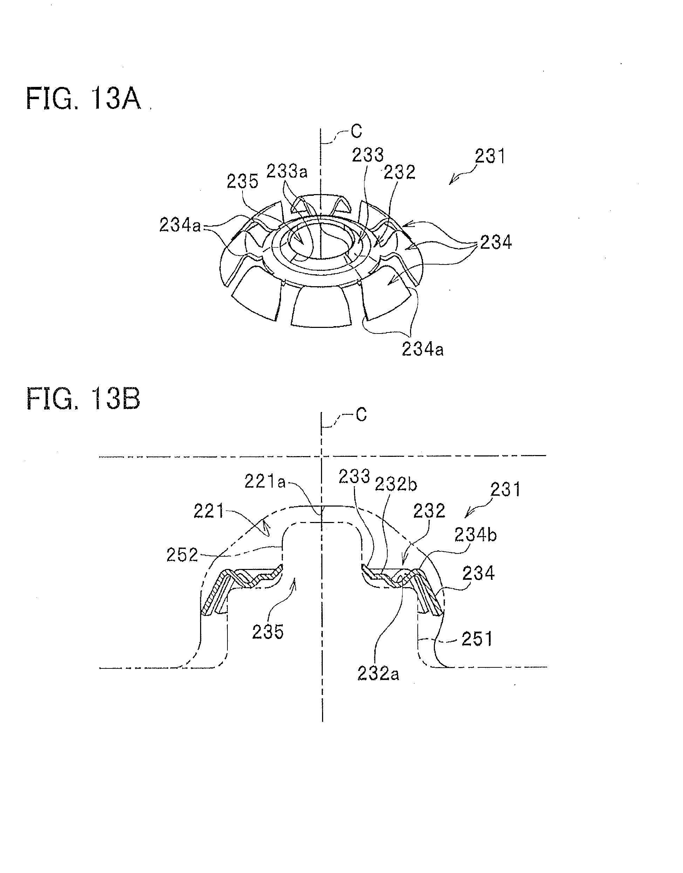

The push nut 231 is made of a metal material. Also, the push nut 231 has a flat and annular shape, as in FIGs. 13A and 13B. A front end portion of the first fastener 241 is inserted into the push nut 231, which is then put in the recess 221. The push nut 231 includes a base plate 232, first engaging hooks (first engaging portions) 233 that are formed on an inner portion of the base plate 232, and second engaging hooks (second engaging portions) 234 that are formed on an outer portion of the base plate 232.

The base plate 232 is made of a metal material and has an annular shape. An axial bore 235 is formed at the center of the base plate 232. As in FIG. 13B, the base plate 232 includes first curved portions 232a that extend towards a larger diameter portion 251 of the first fastener 241 to contact the larger diameter portion 251 and a flat-plate portion 232b disposed to be apart from the larger diameter portion 251. The first curved portions 232a are formed outside the flat-plate portion 232b.

As in FIG. 11 and FIGs. 13A and 13B, the first engaging hooks 233 are formed on the inner edge of the flat-plate portion 232b and inclined relative to the base plate 232 in a direction towards a bottom portion 221a of the recess 221 such that the ends of the first engaging hooks 233 become closer to the center axis C of the axial bore 235 as the ends of the first engaging hooks 233 become close to the bottom portion 221a of the recess 221. As in FIG. 13A, a plurality of first slit portions 233a, which are radially cut inward, are formed on the first engaging hooks 233. The number of the first slit portions 233a is not limited to this embodiment, although the first slit portions 233a of this embodiment are formed at four portions.

As in FIG. 11 and FIGs. 13A and 13B, the second engaging hooks 234 are formed on the outer edges of the first curved portions 232a and are inclined relative to the base plate 232 in a direction opposite to the direction towards a bottom portion 221a of the recess 221 such that the ends of the first engaging hooks 234 become apart from the center axis C of the axial bore 235 as the ends of the first engaging hooks 233 become apart from the bottom portion 221a of the recess 221. Thus, the first engaging hooks 233 and the second engaging hooks 234 are inclined relative to the base plate 232 in the same directions. As in FIG. 13A, a plurality of second slit portions 234a, which are radially cut outward, are formed on the second engaging hooks 234. Although eight second slit portions 234a are formed on the push nut 234, the number of the second slit portions 234a is not limited to this embodiment. The second slit portions 234a are cut at an equal interval. The width of each slit at the outside portion is smaller than that at the inside portion. Thus, each of the widths of the second engaging hooks 234 at the front side portion is larger than each of the widths of the second engaging hooks 234 at the base side portion.

As in FIG. 13B, the second engaging hooks 234 have second curved portions 234b that extend towards the bottom portion 221a of the recess 221. When an external force is applied to the push nut 231, the first curved portions 232a and the second curved portions 234b are deflected to absorb the external force.

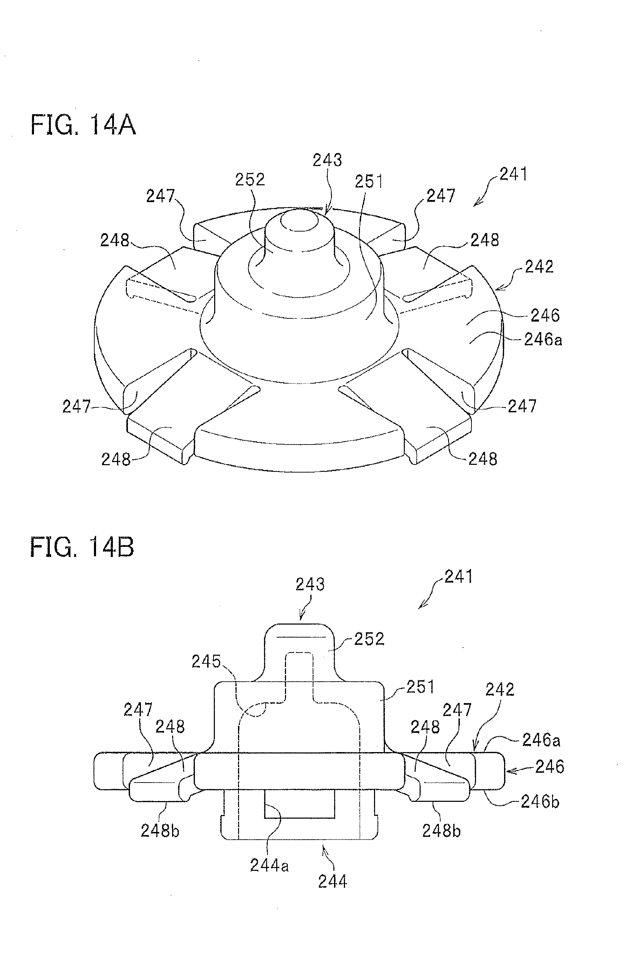

As in FIGs. 14A and 14B, the first fastener 241 includes a first head portion 242, a first leg portion 243 that extends vertically relative to the first head portion 242, a cylindrical portion 244 that extends from the first head portion 242 in a direction opposite to the direction towards the first leg portion 243, and a hollow portion 245 bored in the cylindrical portion 244.

The first head portion 242 includes a disc-shaped body 246, cutout portions 247 cut out of the body 246, and blade members 248 disposed in the cutout portions 247. Each of the cutout portions 247 is a rectangular shape in the plan view and opened outward. Four cutout portions 247 are radially formed on the body 246 in this embodiment.

Each of the blade members 248 is disposed in one of cutout portions 247, and extends outside from the center portion of the first fastener 241. The front ends of the blade members 248 are free portions. As in FIG. 14B, the blade members 248 are inclined relative to the body 246 downward (toward the cylindrical portion 244). The lower ends 248b of the blade members 248 are positioned below a lower surface 246b of the body 246. The numbers of the cutout portions 247 and the blade members 248 are not limited to this embodiment.

The first leg portion 243 extends vertically relative to the first head portion 242 from the center of the first head portion 242. The first leg portion 243 includes a larger diameter portion 251 and a smaller diameter portion 252. The larger diameter portion 251 extends vertically from the first head portion 242 and has a hollow portion therein. The outer diameter of the larger diameter portion 251 is smaller than the inner diameter of the recess 221.

The smaller diameter portion 252 is formed to have the same center as the larger diameter portion 251 has. The outer diameter of the smaller diameter portion 252 is slightly smaller than the inner diameter of the axial bore 235 of the push nut 231.

As in FIG. 14B, the cylindrical portion 244 has an annular shape and extends downward from the first head portion 242. The component 203 is positioned by the cylindrical portion 244. The cylindrical portion 244 receives the second fastener 261. A pair of engaging holes 244a are formed at portions of a side surface of the cylindrical portion 244 that are opposed to each other in a horizontal direction.

As in FIG. 14B, the hollow portion 245 is formed through the larger diameter portion 251, the smaller diameter portion 252, the first head portion 242 and the cylindrical portion 244. A second leg portion 263 of the second fastener 261 is inserted into the hollow portion 245.

Since the second fastener 261 and the component 203 are the same as those in the first embodiment, detailed explanations about the second fastener 261 and the component 203 are omitted. Also, since the mounting procedure and the disengaging procedure of the fastener 204 are the same as those in the first embodiment, their explanations are omitted.

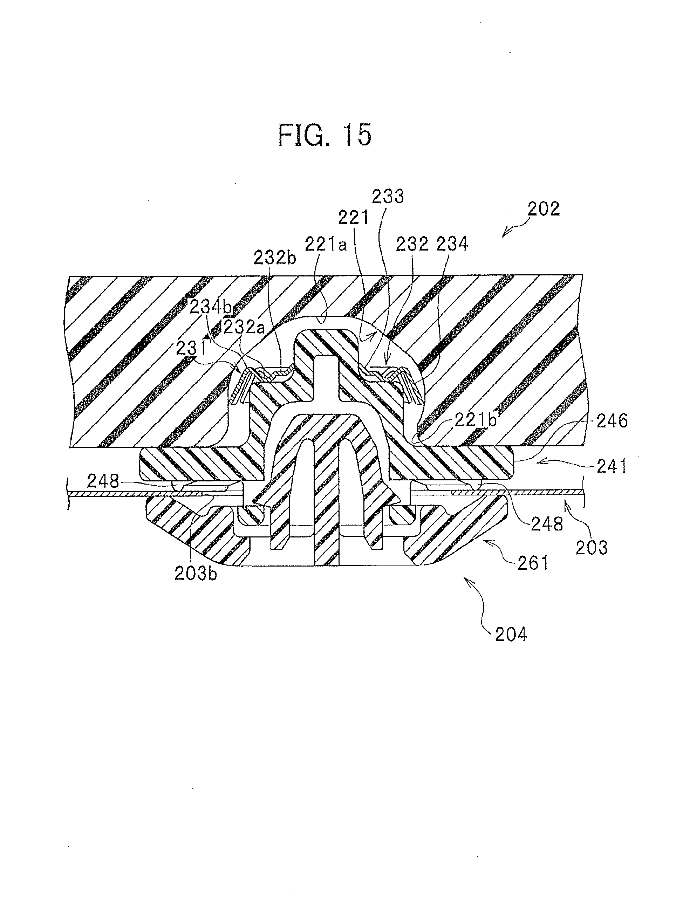

In reference to FIG. 15 a connection condition using the fastener 204 is now explained. As in FIG. 15, a structure that is substantially the same as that in the first embodiment allows the component 203 to be nipped between the first fastener 241 and the second fastener 261. Also, the structure allows the fastener 204 to be mounted in the recess 221. When an external force is applied to the component 203, the first engaging hooks 233 of the push nut 231 and the second engaging hooks 234 bite into the first fastener 241 and the recess 221, respectively. Thus, the first engaging hooks 233 of the push nut and the second engaging hooks 234 are kept engaged with the first fastener 241 and the recess 221, respectively. This results in the connection strength being enhanced.

According to the second embodiment discussed above, the following effects are produced in addition to the advantageous effects that are substantially the same as those by the first embodiment. The blade members 248 of the first fastener 241 are inclined downwards relative to the body 246 (towards the second fastener 261). Thus, the component 203 is pressed towards the second fastener 261 by the blade members 248, when the component 203 is nipped between the first fastener 241 and the second fastener 261. This results in a prevention of looseness between the component 203 and the first and second fasteners 241, 261.

The projecting hooks 221b are formed on the surface of the recess 221. Thus, the second engaging hooks 234 can easily be engaged with the projecting hooks 221b. This results in the connecting force of the fastener 241 being enhanced.

Also, since the width of the front side portion of each of the second engaging hooks 234 of the push nut 231 is larger than that of the base side portion of each of the second engaging hooks 234 of the push nut 231, the second engaging hooks 234 can easily be elastically deflected. This allows the fastener 204 to smoothly be mounted. Also, since the width of the front side portion of each of the second engaging hooks 234 is larger than that of the base side portion of each of the second engaging hooks 234, connected portions of the front side portions of the second engaging hooks 234 are increased. This results in the connection strength of the fastener 204 being enhanced.

When an external force is applied to the component 203, the first curved portions 232a and the second curved portions 234b of the push nut 231 absorb the external force. Thus, the push nut 231 is hard to come off from the recess 221. Although in this embodiment both the first curved portions 232a and the second curved portions 234b are formed on the push nut, at least the second curved portions 234b can absorb an external force.

The second embodiment of this invention is explained above. The embodiment can be changed to an extent that is not out of the scope of this invention. In this embodiment the component is disposed below or above the mounted component and is fastened by the fastener on the mounted component. However, for example, the component may be disposed at the side of the mounted component and fastened by the fastener. Also, recessed portions may be formed on the mounted component and the component to receive fasteners therein. This can prevent the fasteners from coming lower than the lowest surface of the component. The protector and the base plate of the embodiments and modifications are shown as other examples of the component. Instead of the examples another component may be used if the component can be attached to an outer surface of the mounted component and has a shape that can pinch a component.

### [Third Embodiment]

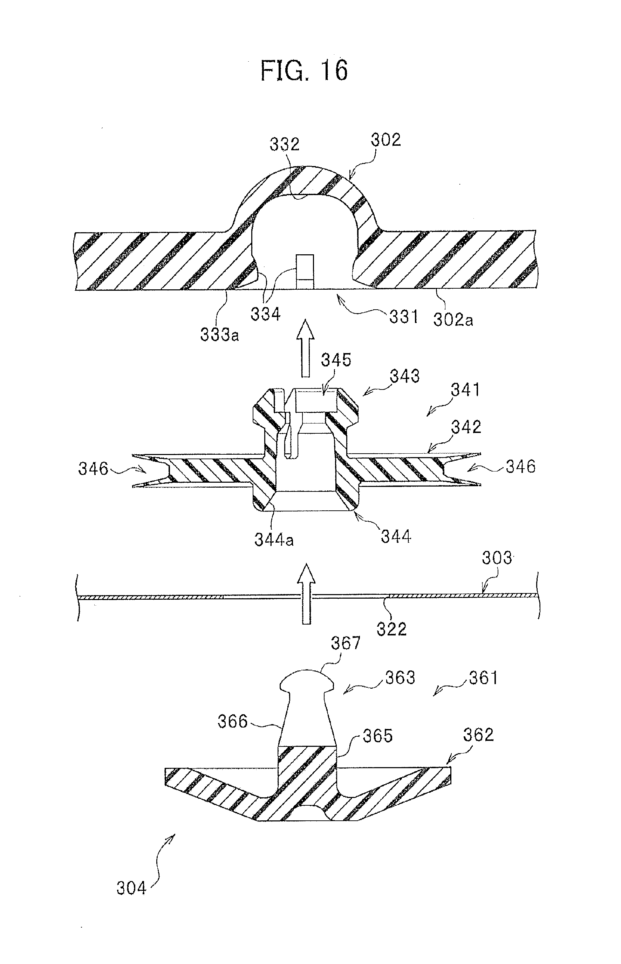

Then, a fastener 304 and its mounting structure of a third embodiment of this invention are explained in detail. The third embodiment is different from the first and second embodiments in that the third embodiment does not have the push nut. As in FIG. 16, the fastener 304 includes a first fastener 341 and a second fastener 361. The first and second fasteners 341, 361 can be separated. A component 303 is pinched between the first fastener 341 and the second fastener 361. Then, the first and second fasteners 341, 361 are engaged with a recess 331 of the mounted component 302.

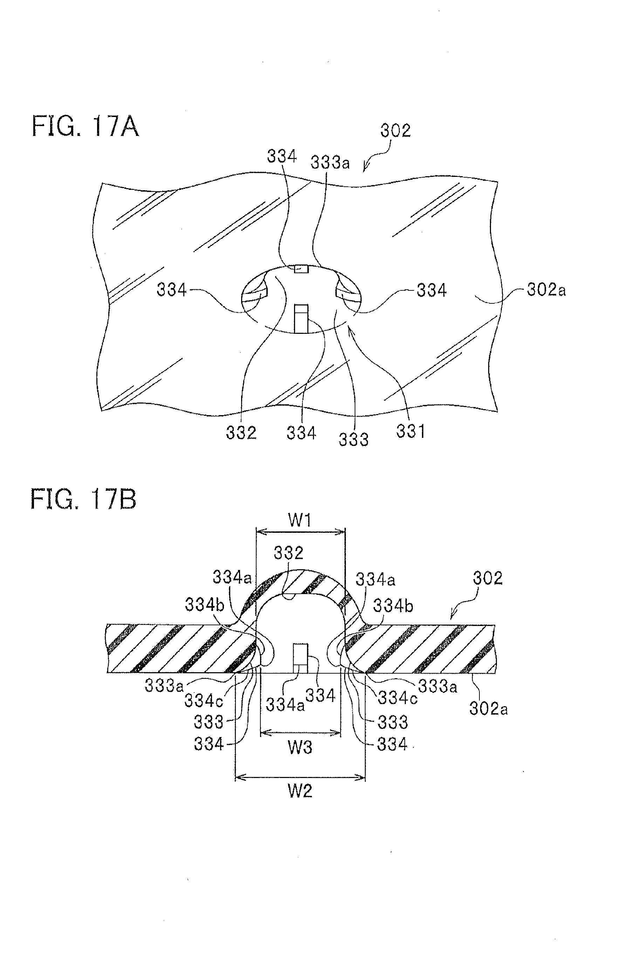

As in FIG. 16 and FIGs. 17A and 17B, the recess 331 of the mounted component 302 is formed to be recessed on an outer surface 302a of the mounted component 302 (or on the lower side surface of the mounted component 302 in this embodiment). The recess 331 is opened downward and bored inside. The recess 331 is formed when the component 302 is blow-molded.

As in FIGs. 17A and 17B, the recess 331 includes a bottom portion 332, an introducing portion 333 formed near an opening portion lower than the bottom portion 332, and a plurality of projecting hooks 334 projecting from the inner peripheral portion of the introducing portion 333. The bottom portion 332 is a bored portion. A first leg portion 343 and a second leg portion 363 of the fastener 304 discussed below are inserted into the bored portion.

The introducing portion 333 is formed downward from a lower portion of the bottom portion 332 such that the outer diameter of the introducing portion 333 is made gradually larger toward the lower end. Also, the introducing portion 333 has curved portions that extend downward. The outer diameter W2 of an opening portion 333a of the introducing portion 333 is formed to be made larger than the maximum width W1 of the bottom portion 332.

Four projecting hooks 334 are formed on the inner peripheral portion of the introducing portion 333 at an equal interval. The first leg portion 343 of the fastener 304 discussed below is engaged with the projecting hooks 334. The projecting hooks 334 have first curved portions 334b and second curved portions 334c. Each first curved portion 334b is continued to the bottom portion 332. Also, the first curved portion 334b is gradually curved to extend upward at an angle. Each second curved portion 334c is continued to the second curved portion 334b. Also, the second curved portion 334c is curved to extend downward from a front end 334a to the opening portion 333a of the projecting hook 334. The distance W3 between a pair of projecting hooks 334 that are opposite to each other is smaller than the maximum width W1 of the bottom portion 332.

The front ends 334a of the projecting hooks 334 are shifted towards the bottom portion 332 from the outer surface 302a of the component 302, so that the fastener 304 can easily be inserted into the bottom portion 332. That is, the fastener 304 is guided to the bottom portion 332 by moving the fastener 304 on the second curved portions 334c. In addition, the first curved portion 334b is gradually curved upward at an angle. Thus, when a mold is removed from the recess 331 after the mounted component is blow-molded, the projecting hooks 334 can be prevented from being broken by moving the mold on the first curved portions 334b. In this embodiment four projecting hooks 334 are formed on the inner peripheral portion of the introducing portion 333. The number of the projecting hooks 334 is not limited to the embodiment and can appropriately be determined in view of a shape of the fastener 304.

As in FIG. 16, the first fastener 341 includes a first head portion 342, a first leg portion 343 that extends from the first head portion 342 towards the recess 331, a cylindrical portion 344 that extends from the first head portion 342 towards the component 303, and a through hole 345 bored through the cylindrical portion 344 in an upper-to-lower direction. The first fastener 341 is disposed between the component 303 and the recess 331. In this embodiment the first fastener 341 is made of a resin material.

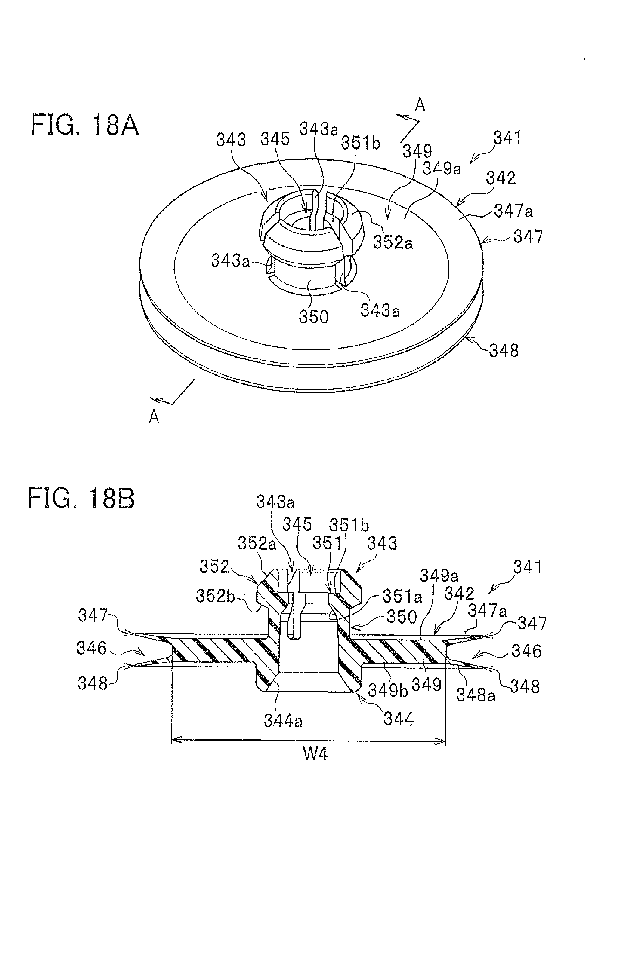

As in Fig. 16 and FIGs. 18A and 18B, the first head portion 342 has a plate shape. Also, the outer diameter of the first head portion 342 is formed to be made larger than the inner diameter of the through hole 322 of the component 303. The first head portion 342 includes a thick portion 349, a pair of thin portions 347, 348 that are formed on a peripheral portion of the thick portion 349, and a groove 346 formed between the thin portions 347, 348.

The thick portion 349 is formed to have an annular shape and serves as a base plate of the first head portion 342. The thick portion 349 includes an inner surface 349a inside the mounted component 302 and an outer surface 349b outside the mounted component 302.

The thin portion 347 is formed around the outer edge of the thick portion 349 and extends upward from the outer edge. That is, the inner surface (or upper surface) 347a of the thin portion 347 is inclined upwards relative to the inner surface (or upper surface) 349a of the thick portion 349. In other words, the thin portion 347 radially extends from the inner surface 349a of the thick portion 349 and is then inclined inward (or toward the mounted component 2) relative to the inner surface 349a of the thick portion 349. Also, the thin portion 347 is formed to become gradually thinner as the thin portion 347 becomes further apart from the center of the first head portion 342.

The thin portion 348 is formed around the outer edge of the thick portion 349 and extends downward from the outer edge. That is, the outer surface (or lower surface) 348a of the thin portion 348 is inclined downward relative to the outer surface (or lower surface) 349b of the thick portion 349. In other words, the thin portion 348 radially extends from the outer surface 349b of the thick portion 349 and is then inclined outward (or towards a direction opposite to the direction towards the mounted component 2) relative to the outer surface 349b of the thick portion 349. Also, the thin portion 348 is formed to become gradually thinner as the thin portion 348 becomes further apart from the center of the first head portion 342.

The groove 346 is formed around the peripheral portion of the first head portion 342 to be recessed toward the center of the first head portion 342. The first head portion 342 has a pair of thin portions 347, 348 around the peripheral portion. When an external force is applied to the thin portions 347, 348, the thin portions 347, 348 can be deflected. In other words, the thin portions 347, 348 are deflected to decrease a distance between the thin portions 347, 348 when an external force is applied to the thin portions 347, 348. Then, the thin portions 347, 348 return to original positions when the external force is free from the thin portions 347, 348.

The first leg portion 343 extends vertically relative to the first head portion 342 from the center portion of the first head portion 342. The first leg portion 343 includes a cylindrical portion 350, an inner projecting portion 351 projecting towards a recessed portion in the cylindrical portion 350, and an outer projecting portion 352 projecting in a direction opposite to the direction towards the inner projecting portion 351. The first leg portion 343 is engaged with the recess 331 of the mounted component 302 and is also engaged with a second leg portion 363 of the second fastener 361. The first leg portion 343 has three slits 343a formed in a vertical direction relative to the inner surface 349a. Since a front portion of the first leg portion 343 is separated by the slits 343a into three portions, the front portion of the first leg portion 343 can radially expand outward or contract inward with a fixed base portion of the first leg portion 343 near the first head portion 342. That is, the front portion of the first leg portion 343 can elastically be deflected, while the base portion of the first leg portion 343 is fixed to the first head portion 342.

The inner projecting portion 351 has a tapered portion 351a and a bump portion 351b. The tapered portion 351a is formed such that the diameter of the through hole 345 is gradually decreased in an upper direction. The tapered portion 351a allows the second leg portion 363 of the second fastener 361 (FIG. 16) to be easily inserted into the through hole 345. The bump portion 351b is formed around the inner peripheral portion of the first leg portion 343 to have a narrower width than that of the bump portion 361b. The second leg portion 363 of the second fastener 361 is engaged with the bump portion 351b.

The outer projecting portion 352 has a tapered portion 352a whose width is gradually narrower in an upper direction from the lower portion, and an overhang portion 352b that extends outward from the outer surface of the cylindrical portion 350. The tapered portion 352a allows the first fastener 341 to be easily inserted into the recess 331 of the mounted component 302 (FIG. 16). The overhead portion 352b is tapered from the outer surface of the cylindrical portion 350 to have a width that is gradually wider in an upper direction. Also, the overhead portion 352b is formed around the peripheral portion of the first leg portion 343. The overhead portion 352b is engaged with the projecting hooks 334 on the recess 331.

The cylindrical portion 344 is in a cylindrical shape and projects downward from the first head portion 342. The component 303 is positioned by the cylindrical portion 344. The cylindrical portion 344 receives the second fastener 361. A tapered portion 344a is formed such that the through hole 345 is formed to be gradually wider in a lower direction. The tapered portion 344a allows the second leg portion 363 of the second fastener 361 to be easily inserted into the cylindrical portion 344.

The first fastener 341 of this embodiment is formed as discussed above and may have any shape. For example, the front portion of the first leg portion 343 may be separated into any number of portions, although the front portion of the first leg portion 343 of this embodiment is separated into three portions.

As in FIG. 16, the second fastener 361 includes a second head portion 362 and a second leg portion 363 that extends upward from the second head portion 362. The second fastener 361 is disposed below (or outside) the component 303. In this embodiment the second fastener 361 is made of a material that is excellent in fire resistance and heat resistance in comparison with the material of the first fastener 341. The material of the second fastener 361 is not limited to such a material.

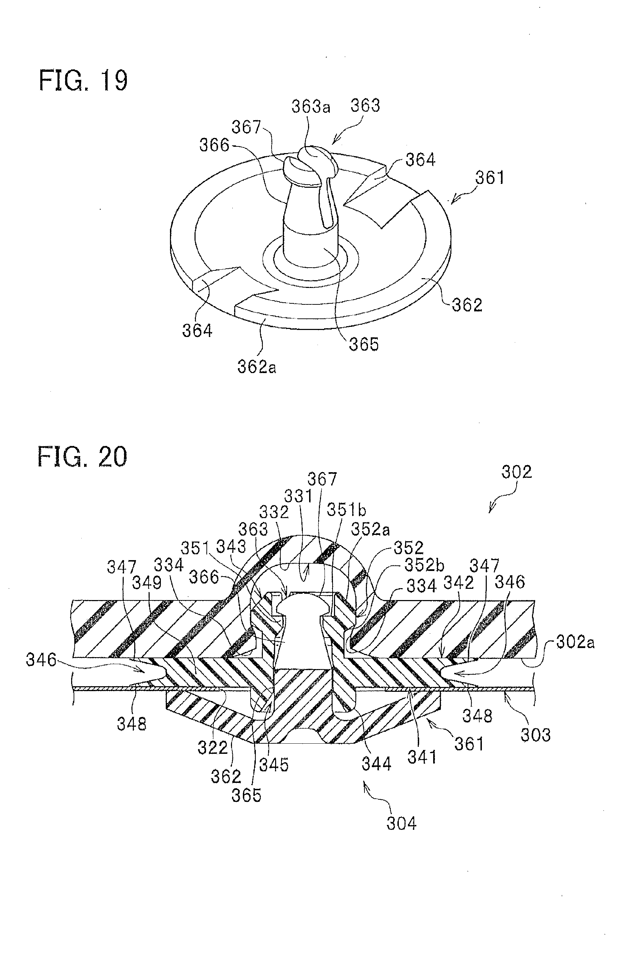

As in FIGs. 16 and 19, the second head portion 362 is a generally disk-shaped member and formed to be recessed at the center of the surface in a direction opposite to the direction towards the component 303. The outer diameter of the second head portion 362 is as large as the outer diameter W4 (FIG. 18B) of the thick portion 349 of the first fastener 341. Recessed portions 364, 364 are formed on an outer surface 362a of the second head portion 362 to be cutout from the outer surface 362a to the center of the second head portion 362. The recessed portions 364, 364 of this embodiment are formed at a pair of portions which are opposed to sandwich the second leg portion 363. The recessed portions 364, 364 may have any shape. It is desirable that each of the recessed portions 364, 364 is formed to have a width and a height so as to receive a tool such as a screwdriver, since such a screwdriver is inserted into the recessed portion 364 to release the second fastener 361.

The second leg portion 363 extends vertically relative to the second head portion 362 from the center of the second head portion 362. The second leg portion 363 has a predetermined height from the second head portion 362. The second leg portion 363 is inserted into the through hole 322 of the component 303 and also inserted into the through hole 345 of the first fastener 341. The second leg portion 363 includes a base shaft portion 365 that extends vertically relative to the second head portion 362, a tapered portion 366 that extends vertically relative to the second head portion 362 from the base shaft portion 365, and a front end portion 367 formed at the top end of the tapered portion 366. A slit 363a is formed on the second leg portion 363 by two-thirds of the height of the second leg portion 363 from the top end of the second leg portion 363. A part of the second leg portion 363 is separated into two portions by the slit 363a so that a front end side portion of the second leg portion 363 can radially expand outward or contract inward with a fixed base portion of the second leg portion 363 near the second head portion 362. That is, the front end side portion of the second leg portion 363 can elastically be deflected, while the base portion of the second leg portion 363 is fixed to the second head portion 362.

The tapered portion 366 is formed to have a trapezoidal shape in a sectional view and to be narrower in width towards the front end portion 367. The outer diameter of the front end portion 367 is larger than that of the top end of the tapered portion 366. The largest outer diameter of the front end portion 367 is formed to be as large as the outer diameter of the base shaft portion 365. Also, the largest outer diameter of the front end portion 367 is formed to be larger than the inner diameter of the inner projecting portion 351.

The second fastener 361 of this embodiment is formed as discussed above and may have any shape. The front end side portion of the second leg portion 363 may be separated into any number of portions, although the front end side portion of the second leg portion 363 of this embodiment is separated into two portions. The slits 363a may not be formed. The recessed portions 364 of the second head portion 362 may be formed as necessary.

Then, a mounting method and a connection condition of the fastener 304 are explained. In fastening the component 303 to the mounted component 302 as in FIG. 20, first, the first fastener 341 is inserted into the recess 331, then, the component 303 is positioned by the through hole 322 of the component 303, and finally, the second fastener 361 is inserted (or pressed) into the through hole 322 outside the component 303 and the first fastener 341 to mount the component 303 on the mounted component 302.

Specifically, first, the first leg portion 343 of the first fastener 341 is inserted into the recess 331. When the first leg portion 343 is inserted into the recess 331, the projecting hook 334 in the recess 331 radially presses inward the first leg portion 343 such that the first leg portion 343 is elastically deformed to decrease the diameter of the first leg portion 343. When the outer projecting portion 352 of the first leg portion 343 passes over the projecting hook 334, the separated portions of the first leg portion 343 return to original positions so that the first leg portion 343 is engaged with the projecting hook 334 in the recess 331.

Then, the cylindrical portion 344 of the first fastener 341 is inserted into the component 303 through the through hole 322. This allows the component 303 to be positioned relative to the first fastener 341.

Finally, the second fastener 361 is inserted into the through hole 345 so that the second fastener 361 is mounted to the first fastener 341. When the second fastener 361 is inserted into the through hole 345 of the first fastener 341, the second leg portion 363 of the second fastener 361 is slightly decreased in diameter (or elastically deflected inward), while the second leg portion 363 abuts on the inner projecting portion 351 to press outward the first leg portion 343. When the front end portion 367 passes over the inner projecting portion 351, the first leg portion 343 and the second leg portion 363 are elastically returned to the original shapes such that the front end portion 367 is engaged with the bump portion 351b. Also, the component 303 is pinched between the first head portion 342 and the second head portion 362.

As stated above, in the fastener 304 the outer peripheral portion of the first leg portion 343 is engaged with the projecting hook 334 while the inner peripheral portion of the first leg portion 343 is engaged with the outer peripheral portion of the second leg portion 363. Also, the inner projecting portions 351 of the first leg portion 343 pinch around the front end of the tapered portion 366 of the second leg portion 363.

As in FIG. 20, the fastener 304 is inserted into the recess 331 to pinch the component 303 between the first fastener 341 and the second fastener 361. If an outer force is applied downward to the component 303 or the second fastener 361, the front end portion 367 abuts on the bump portion 351b of the first leg portion 343 to try to spread the separated portions of the first leg portion 343 in a horizontal direction. However, the fastener 304 can be prevented from being come off from the recess 331, because the first leg portion 343 is rigidly engaged with the projecting hook 334 in the recess 331.

To disengage the fastener 304 from the recess 331 a tool such as a screwdriver is inserted into the recessed portion 364 of the second fastener 361. Then, a force is applied by the screwdriver to the first fastener 341 to disengage the front end portion 367 from the bump portion 351b. When the second fastener 361 is disengaged from the first fastener 341, the front end portions of the first leg portion 343 of the first fastener 341 can radially be deflected inward, so that the first fastener 341 can be disengaged from the recess 331.

In this embodiment of this invention the component 303 is mounted on the mounted component 302, discussed above. However, for example, after the component 303 is pinched between the first fastener 341 and the second fastener 361, the fastener 304 may be inserted into (or pressed to) the recess 331 to mount the component on the mounted component 302.

According to the component mounting structure of the third embodiment discussed above, the recess 331 has only to be formed on the outer surface 302a of the mounted component 302. Thus, the structure of a mold for molding the mounted component 302 can be simplified. This leads to a decrease of the manufacturing costs, because the third embodiment does not need any complicated work such as a boss welding or an insert blow molding. Also, the component 303 can easily be mounted on the mounted component 302 by engaging the fastener 304 with the projecting hooks 304 on the recess 331.

Also, according to the fastener 304 of this embodiment, the component 303 can be more rigidly mounted on the mounted component 302, because the outer projecting portion 352 of the first leg portion 343 is engaged with the projecting hook 334 in the recess 331, also because the front end portion 367 of the second leg portion 363 is engaged with the bump portion 351b of the first leg portion 343.

Also, the first head portion 342 has the thin portions 347, 348. Thus, the outer side portion of the first head portion 342 can easily be deflected. The recess 331 of the mounted component 302, the component 303 and the fastener 304 have deformed portions generated during their moldings. Thus, there is a possibility that the component 303 has looseness relative to the mounted component 302 because of the dimensional tolerance. Also, there is a possibility that a work for mounting the component 303 on the mounted component 302 becomes hard to be conducted. However, in this embodiment the thin portions 347, 348 are deflected so that the fastener 304 can be deformed to meet the shapes of the mounted component 302, etc. This allows the dimensional tolerance of each member to be absorbed, so that the members can stably be mounted. Also, the deformations of the thin portions 347, 348 allow easiness for mounting the fastener 304 to be enhanced. Further, the thin portions 347, 348 are formed on the upper side portion and the lower side portion of the thick portion 349. As a result, the thin portions 347, 348 can be elastically deformed as the mounted component 302 and the component 303 are deflected.

The distance W3 between a pair of the projecting hooks 334 that are opposed to each other is smaller than the maximum width W1 of the bottom portion 332. This results in the first leg portion 343 and the second leg portion 363 of the fastener 304 being certainly held in the recess 331. Also, the outer diameter W4 of the thick portion 349 of the first head portion 342 is as large as the outer diameter of the second head portion 362, so that the component 303 can firmly be pinched between the first head portion 342 and the first head portion 342.

The recessed portions 364 are formed on the second head portion 362. The fastener 304 can easily be disengaged by inserting a screwdriver into one of the recessed portions 364. When the tank bands in FIG. 1 are provided on the mounted component 302, the mounted component 302 and the component 303 can certainly be mounted on a vehicle.

### [Third Modification]

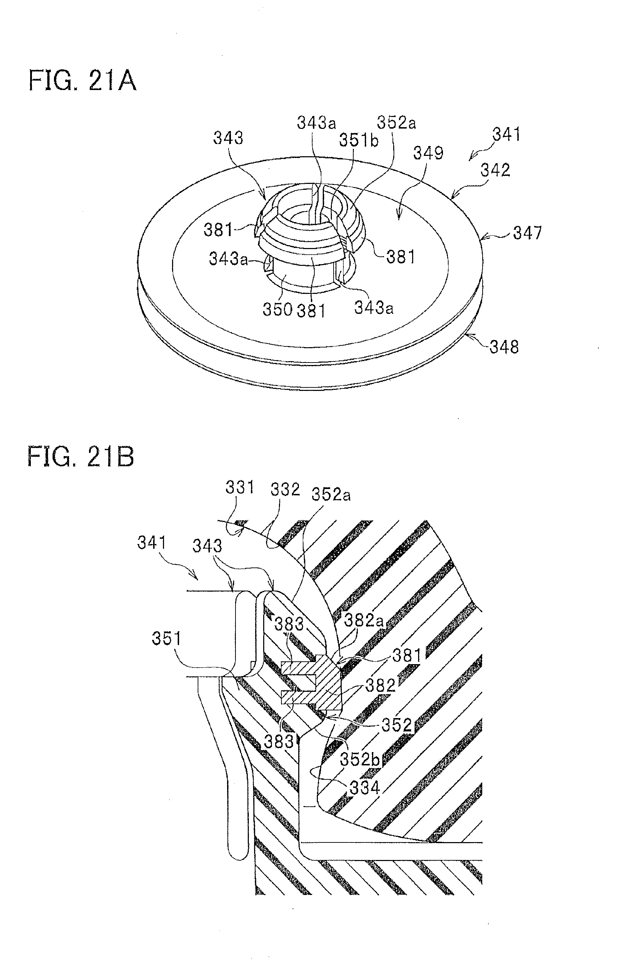

Then, a third modification is explained. FIGs. 21A and 21B show a third modification. FIG. 21A is a perspective view of the third modification. FIG. 21B is an expanded view showing a main section of the third modification. The third modification is different from the embodiments discussed above in that the third modification has a stiffening member 381 around the peripheral portion of the first leg portion 343 of the first fastener 341. This modification is generally the same as the third embodiment except for the different point. Thus, overlapped explanations are omitted.

As in FIGs. 21A and 21B, the first fastener 341 of the third modification includes the first head portion 342, the first leg portion 343 that extends vertically relative to the first head portion 342 towards the recess 331, the cylindrical portion 344 that extends vertically relative to the first head portion 342 towards the component 303 (in FIG. 16), and the stiffening member 381.

The stiffening members 381 are attached around the entire peripheral portion of the outer projecting portion 352 of the first leg portion 343. The first leg portion 343 of this embodiment is separated into three portions. Also, three stiffening members 381 are provided to meet the three portions of the first leg portion 343. Each stiffening member 381 includes an outer peripheral portion 382 that is exposed outside the outer projecting portion 352 and a pair of insertion portions 383, 383 projecting vertically relative to the outer peripheral portion 382. The stiffening members 381 of this modification are made of a metal material. It is preferable that the stiffening member 381 is harder than the mounted component 302 and the first fastener 341.

The outer peripheral portion 382 is attached on the entire outer peripheral portion of the outer projecting portion 352 and engaged with the projecting hook 334 of the recess 331. In this modification a tapered surface 382a is formed on the upper side of the outer peripheral portion 382. The tapered surface 382a is inclined relative to the outer peripheral portion 382 in a lower direction to become apart from the outer projecting portion 352. The tapered surface 382a allows the first fastener 341 to be easily inserted into the recess 331 without holding the outer peripheral portion 382 at the projecting hook 334. The insertion portions 383, 383 are inserted into recesses formed on outer peripheral portions of the outer projecting portion 352.

The stiffening members 381 of this embodiment are made by insert molding. However, the stiffening members 381 may be made by another technique. The stiffening member 381 may be made to be inserted into recesses formed on the outer projecting portion 352.

According to the third modification, the stiffening member 381 is formed on an outer peripheral portion of the first leg portion 343 to extend outward from the outer peripheral portion, as in FIG. 21B. The stiffening member 381 can prevent the first leg portion 343 that tends to wear from wearing down. Also, the projecting hooks 334 on the recess 331 can more rigidly be engaged with the stiffening member 381.

### [Fourth Modification]

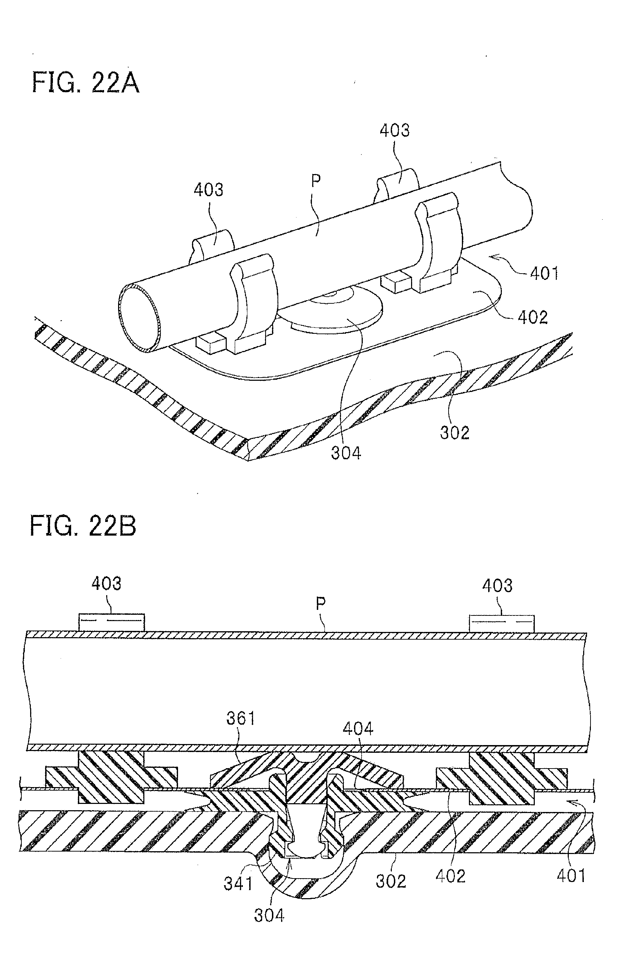

Then, a fourth modification is explained. FIGs. 22A and 22B show the fourth modification. FIG. 22A is a perspective view of the fourth modification. FIG. 22B is a sectional side view of the fourth modification. The third embodiment discussed above shows an example of a protector for protecting a component. This fourth modification shows an example of a base plate 402 used for a mounting member 401 to mount a tube as a component on a mounted component. The fourth modification is the same as the third embodiment except for the mounting member 401. Thus, overlapped explanations are omitted.

As in FIG. 22A, the mounting member 401 is used to attach (or fix) a tube P such as a vapor return tube to the mounted component 302. The mounting member 401 includes a base plate (a component) 402 and a pair of clamping clips 403, 403, which extends vertically relative to the base plate 402.

As in FIG. 22B, a through hole 404 is formed on the base plate (or a component) 402 to pass the fastener 304 therethrough. Each clamping clip 403 is formed into a U-shaped shape in a side view to hold the tube P when the tube P is pressed into the clamping clip 403 from the opening side of the clamping clip 403.

As in FIG. 22B, the base plate (the component) 402 is pinched between the first fastener 341 and the second fastener 361, while the first fastener 341 and the second fastener 361 pass through the through hole 404. As a result, the fastener 304 can easily mount even the base plate 402 on a mounted component.

The embodiments and modifications of this embodiment are explained above. They can be modified as necessary to an extent that is not out of the scope of this invention. Although in this embodiment the component is disposed below or above the mounted component 302 and is fastened by the fastener 304 on the mounted component 302, the fastener 304 may receive a component in a horizontal direction to fasten the component. Also, in the embodiments and the modifications discussed above the protector and the base plate are examples of the component. The component may have other shapes that can be mounted outside mounted component 302 and that the fastener 304 can pinch.

The third embodiment may include the blade members 248 (FIGs. 14A and 14B) of the second embodiment to press the component 303 towards the second fastener 361. This allows the component 3 that is pinched between the first and second fasteners 341, 361 to be prevented from having looseness between the component 3 and the first and second fasteners 341, 361. Also, the third embodiment may have the push nut of the first and second embodiments. That is, the push nut may be engaged with the recess 331 and the first fastener 341.

### Explanations of Reference

- 1: Component mounting structure
- 2: Mounted component (fuel tank)
- 3: Component (protector, base plate)
- 4: Fastener
- 5: Tank band (band)
- 21: Recess
- 21a: Bottom portion
- 21b: Projecting hook
- 31: Push nut
- 32: Base plate
- 33: First engaging hook (first engaging portion)
- 33a: First slit portion
- 34: Second engaging hook (second engaging portion)
- 34a: Second slit portion
- 35: Axial bore
- 41: First fastener
- 42: First head portion
- 43: First leg portion
- 44: Cylindrical portion
- 44a: Engaging hole
- 45: Hollow portion
- 52b: rib
- 61: Second fastener
- 62: Second head portion
- 63: Second leg portion
- 65: Spill port
- 67: Base shaft portion
- 68: Engaging member
- 68a: Engaging projection
- 231: Push nut
- 232: Base plate
- 232a: First curved portion
- 233: First engaging hook (first engaging portion)
- 233a: First slit portion
- 234: Second engaging hook (second engaging portion)
- 234a: Second slit portion
- 234b: Second curved portion
- 235: Axial bore
- 246: Body
- 247: Cutout portion
- 248: Blade member
- 302: Mounted component
- 303: Component (protector, base plate)
- 304: Fastener
- 322: Through hole
- 331: Recess
- 334: Projecting hook
- 341: First fastener
- 342: First head portion
- 343: First leg portion
- 346: Groove
- 347: Thin portion
- 348: Thin portion
- 349: Thick portion
- 361: Second fastener
- 362: Second head portion
- 363: Second leg portion
- 364: Recessed portion
- 381: Stiffening member

## Claims

1. A component mounting structure comprising:
a mounted component having a recess on an outer surface;
a component that is mounted on the outer surface of the mounted component; and
a fastener that includes a first fastener disposed at an inner side portion of the component, the inner side portion of the component being opposed to the mounted component, and a second fastener disposed at an outer side portion of the component, the outer side portion of the component being apart from the mounted component, the second fastener being engaged with the first fastener; wherein
the second fastener is pressed into the first fastener to pinch the component between the first fastener and the second fastener to hold the component between the first fastener and the second fastener;
the fastener further includes a push nut into which an end portion of the first fastener is inserted;
the push nut includes:
a base plate having an axial bore into which the end portion of the first fastener is inserted;
a first engaging portion formed inside the base plate and inclined relative to the base plate in a direction towards a bottom portion of the recess such that an end of the first engaging portion becomes closer to a center axis of the axial bore as the end of the first engaging portion becomes close to the bottom portion of the recess; and
a second engaging portion formed outside the base plate and inclined relative to the base plate in a direction opposite to the direction towards the bottom portion of the recess such that an end portion of the second engaging portion becomes apart from the center axis of the axial bore as the end of the second engaging portion becomes apart from the bottom portion of the recess; wherein
the first fastener is engaged with the first engaging portion, and a surface of the recess is engaged with the second engaging portion.

2. A component mounting structure of claim 1 wherein the second engaging portion includes a plurality of second engaging hooks.

3. A component mounting structure of claim 2 wherein a front side portion of each of the second engaging hooks is larger in width than a base side portion of each of the second engaging hooks.

4. A component mounting structure of claim 2 wherein each of the second engaging hooks has a curved portion that extends towards the bottom portion of the recess.

5. A component mounting structure of claim 1 wherein the first engaging portion includes a plurality of first engaging hooks.

6. A component mounting structure of claim 1 wherein a rib extends vertically relative to an outer peripheral portion of the end portion of the first fastener from the outer peripheral portion.

7. A component mounting structure of claim 1 wherein
the first fastener includes a plate-like first head portion, a first leg portion extending vertically relative to the first head portion from the first head portion, a cylindrical portion extending vertically relative to the first head portion in a direction opposite to the direction towards the first leg portion, a hollow portion bored in the first head portion, the first leg portion and the cylindrical portion, and an engaging hole in the cylindrical portion,
the second fastener includes a plate-like second head portion, a second leg portion extending vertically relative to the second head portion from the second head portion, a second leg portion extending vertically relative to the second head portion, and an engaging projection formed on the second leg portion, and
the second leg portion is inserted into the hollow portion while the engaging projection is engaged with the engaging hole.

8. A component mounting structure of claim 7 wherein
the first head portion includes a plate-like body, a cutout portion opened outward from the body, and a blade member in the cutout portion extending outward from a center portion of the first head portion, and
the blade member is inclined relative to the body in a direction towards the second fastener to press the component towards the second fastener.

9. A component mounting structure of claim 7 wherein
the second leg portion includes a base shaft portion extending vertically relative to the second head portion, and a pair of engaging members extending from a top end of the base shaft portion toward the second head portion and having the engaging projections,
the second head portion includes spill ports formed at a pair of portions which are opposed to sandwich the base shaft portion to receive front ends of the engaging members, and
the engaging projections become engaged with the engaging holes of the cylindrical portion as the engaging members become elastically deformed.

10. A push nut for mounting a second member to a recess formed in a first member comprising:
a base plate having an axial bore into which the second member is inserted;
a first engaging portion formed inside the base plate and inclined relative to the base plate in a direction towards a bottom portion of the recess such that an end of the first engaging portion becomes closer to a center axis of the axial bore as the end of the first engaging portion becomes close to the bottom portion of the recess; and
a second engaging portion formed outside the base plate and inclined relative to the base plate in a direction opposite to the direction towards the bottom portion of the recess such that an end portion of the second engaging portion becomes apart from the center axis of the axial bore as the end of the second engaging portion becomes apart from the bottom portion of the recess; wherein
the second engaging portion is engaged with the first engaging portion, while a surface of the recess is engaged with the second engaging portion.

11. A component mounting structure for mounting a component on an outer surface of a mounted component comprising:
a recess formed on an outer surface of the mounted component;
a component having a through hole and mounted on the outer surface of the mounted component; and
a fastener includes a first fastener disposed at an inner side portion of the component, the inner side portion of the component being opposed to the mounted component, and a second fastener disposed at an outer side portion of the component, the outer side portion of the component being apart from the mounted component; wherein
the fastener pinches the component between the first fastener and the second fastener which pass through the through hole, and the fastener is engaged with a projecting hook formed on an inner peripheral portion of the recess.

12. A component mounting structure of claim 11 wherein
the first fastener includes a plate-like first head portion, a first leg portion that is elastically-deformable extending vertically relative to the first head portion from the first head portion, and a hollow portion bored through the first head portion and the first leg portion,
the second fastener includes a plate-like second head portion and a second leg portion extending vertically relative to the second head portion from the second head portion,
the second leg portion of the second fastener is inserted into the hollow portion of the first fastener to pinch the component between the second fastener and the first fastener, and
an outer peripheral portion of the first leg portion is engaged with the projecting hook on the recess while an inner peripheral portion of the first leg portion is engaged with an outer peripheral portion of the second leg portion.

13. A component mounting structure of claim 12 wherein
the first head portion of the first fastener includes a thick portion that has an annular shape and a pair of thin portions each of which is thinner in thickness than the thick portion, the thin portions radially extending from inner and outer surface side portions of the thick portion, the inner surface side portion of the thick portion being opposed to the mounted component, the outer surface side portion of the thick portion being apart from the mounted component,
the thin portion at the inner surface side portion of the thick portion is inclined relative to the inner surface side portion towards the mounted component, and
the thin portion at the outer surface side portion of the thick portion is inclined relative to the outer surface side portion in a direction opposite to the direction towards the mounted component.

14. A component mounting structure of claim 11 wherein
the recess includes a bored bottom portion and a plurality of the projecting hooks formed on the bottom portion, and
a distance between the projecting hooks that are opposed to each other is smaller than a maximum width of the bottom portion.

15. A component mounting structure of claim 12 wherein
a stiffening member is provided on the outer peripheral portion of the first leg portion of the first fastener to be engaged with the projecting hooks on the recess.

16. A component mounting structure of claim 12 wherein
a recessed portion is formed on an outer side surface of the second head portion of the second fastener by cutting out a portion of the second head portion towards the second leg portion.

17. A component mounting structure of claim 11 further comprising
a band for holding outside the mounted component and the component.
